# EUROPÄISCHE PATENTSCHRIFT

(11) **EP 3 423 522 B1**
(45) Veröffentlichungstag und Bekanntmachung des Hinweises auf die Patenterteilung: **12.02.2025**
(21) Anmeldenummer: 17707211.3
(22) Anmeldetag: 20.02.2017
(51) Int. Cl.: C08K 5/00, C08K 5/3492, C08K 5/52, C08K 5/5313, C08K 7/14, C08L 77/02, C08L 77/06

(54) **FLAMMHEMMENDE POLYAMIDZUSAMMENSETZUNG**
FLAME-RETARDANT POLYAMIDE COMPOSITION
COMPOSITION DE POLYAMIDE IGNIFUGE

(30) Priorität: 29.02.2016 DE 102016203221
(43) Veröffentlichungstag der Anmeldung: 09.01.2019
(73) Patentinhaber: Clariant International Ltd, 4132 Muttenz (CH)
(72) Erfinder: HÖROLD, Sebastian, 86420 Diedorf (DE); SCHLOSSER, Elke, 86163 Augsburg (DE)
(74) Vertreter: Clariant Produkte (Deutschland) GmbH
(86) Internationale Anmeldenummer: PCT/EP2017/053740
(87) Internationale Veröffentlichungsnummer: WO 2017/148721

(56) Entgegenhaltungen:
- EP-A1- 1 544 206
- EP-A1- 1 544 206
- WO-A1-2012/045414
- WO-A1-2012/045414
- WO-A1-2015/113740
- WO-A1-2015/113740

## Beschreibung

Die vorliegende Erfindung betrifft eine flammhemmende Polyamidzusammensetzung sowie Formkörper, die diese flammhemmende Polyamidzusammensetzung enthalten.

Aufgrund ihrer chemischen Zusammensetzung sind viele Kunststoffe leicht brennbar. Um die von Kunststoffverarbeitern und teilweise vom Gesetzgeber geforderten hohen Flammschutzanforderungen erreichen zu können, müssen Kunststoffe in der Regel mit Flammschutzmitteln ausgerüstet werden. Hierzu sind eine Vielzahl unterschiedlicher Flammschutzmittel und Flammschutzmittelsynergisten bekannt und auch kommerziell erhältlich. Aufgrund der vorteilhafteren Brandnebenerscheinungen bezüglich Rauchgasdichte und Rauchgaszusammensetzung sowie aus ökologischen Gründen werden nichthalogenierte Flammschutzmittelsysteme seit einiger Zeit bevorzugt eingesetzt.

Unter den nicht-halogenierten Flammschutzmitteln haben sich insbesondere für thermoplastische Polymere die Salze von Phosphinsäuren (Phosphinate) als sehr wirksam erwiesen (DE-A-2252258 und DE-A-2447727. Dabei werden einige Derivate dieser Flammschutzmittelklasse aufgrund ihres geringen negativen Einflusses auf die mechanischen Eigenschaften der thermoplastischen Formmassen geschätzt und entsprechend eingesetzt.

Darüber hinaus wurden synergistische Kombinationen von Phosphinaten mit bestimmten stickstoffhaltigen Verbindungen, insbesondere mit Melaminderivaten, gefunden, die in einer ganzen Reihe von Polymeren als Flammschutzmittel effektiver wirken, als die Phosphinate allein (WO-A-2002/28953, WO-A-97/01664 sowie DE-A-19734437 und DE-A-19737727).

Ferner wurde gefunden, dass die Flammschutzwirkung der verschiedenen Phosphinate in thermoplastischen Polymeren auch durch Zusätze kleiner Mengen anorganischer bzw. mineralischer Verbindungen, die keinen Stickstoff enthalten, deutlich verbessert werden kann und dass die genannten Zusätze auch die Flammschutzwirkung von Phosphinaten in Kombination mit stickstoffhaltigen Synergisten verbessern können (EP-A-0024167, WO-A-2004/016684). Insbesondere die Kombination von Phosphinaten mit Melaminpolyphosphat führt in Polyamiden zu V-0 Einstufungen nach dem UL 94 Test.

Bei der Verwendung von phosphinathaltigen Flammschutzmittelsystemen kam es insbesondere bei Verarbeitungstemperaturen oberhalb 300 °C anfänglich zu partiellem Polymerabbau, zu Verfärbungen des Polymers und zur Qualmentwicklung bei der Verarbeitung. Diese Schwierigkeiten ließen sich jedoch durch Zusatz von basischen oder amphoteren Oxiden, Hydroxiden, Carbonaten, Silikaten, Boraten oder Stannaten eindämmen (WO-A-2004/022640).

Zur weiteren Verbesserung der Thermostabilität legt die WO 2012/045414 die Kombination aus einem Phosphinsäuresalz mit einem Salz der phosphorigen Säure offen. Die Flammschutzwirkung der Phosphinsäuresalze kann dadurch deutlich verbessert werden, insbesondere in aliphatischen Polyamiden. Gegenüber der Verwendung von Melaminpolyphosphat als Synergist werden keine Ausblühungen nach feucht-warm Lagerung beobachtet. Die WO-A-2014/135256 beschreibt flammwidrige Polyamide mit einem Phosphinsäuresalz sowie einem Salz der phosphorigen Säure als Synergist sowie Verstärkungsstoffen und weiteren Additiven. Die so erhaltenen Polyamidformmassen zeigen gute thermische Stabilität und keine Migrationsneigung. Die Brandklasse UL 94 V-0 wird erreicht sowie eine Kriechfestigkeit (Comparative Tracking Index, CTI) von 600 Volt.

Halogenfreie Polyamidzusammensetzungen zeigen häufig nicht ausreichende Glühdrahtergebnisse bezüglich der sogenannten Glow Wire Ignition Temperature (GWIT) nach IEC 60335, das heißt es kommt an der 750 °C heißen Glühdrahtspitze zur unerwünschten Entzündung des Polyamids. Ein GWIT von 750 °C oder höher wird benötigt für die Verwendung von flammwidrigen Polyamidformmassen in unbeaufsichtigten Haushaltsgeräten.

Die US-A-2007/299171 beschreibt Thermoplaste, insbesondere Polyamide, enthaltend ein Phosphinsäuresalz (F1), ein Reaktionsprodukt aus Melamin und Phosphorsäure (F2) und ein Kondensationsprodukt vom Melamin (F3), wobei F1+F2 wenigstens 13 %, bevorzugt mindestens 15 % sind bezogen auf die gesamte Zusammensetzung. Durch die gleichzeitige Verwendung von F1, F2 und F3 wird ein GWIT von 775 °C erreicht. Nachteilig an derartigen Formulierungen ist, dass es durch die Verwendung von Reaktionsprodukten aus Melamin und Phosphorsäure zu Migrationseffekten kommen kann. Zudem ist die Thermostabilität auf etwa 300 °C begrenzt, bei noch höheren Verarbeitungstemperaturen kann es zu Polymerabbau und Zersetzungen kommen.

Die US 2014/0371357 beschreibt thermoplastische Polyamide mit 10 - 40 Gew.-% Glassfasern, 10 - 40 Gew.-% Melam und 0 - 15 % eines halogenfreien Flammschutzmittels, wobei das Polyamid bis zu 10 Mol-% aromatische Monomereinheiten enthält. Es wird ein GWIT von mindestens 800 °C erreicht; das halogenfreie Flammschutzmittel kann ein Metallphosphinat sein. Nachteilig an der Verwendung von Melam ist der hohe Füllgrad von 30 - 35 % um UL 94 V-0 und GWIT > 750 °C zu erreichen, was die Fließfähigkeit und die mechanischen Eigenschaften der Polyamidcompounds verringert.

Es war daher Aufgabe der vorliegenden Erfindung, halogenfreie, flammgeschützte, thermoplastische Polyamidzusammensetzungen (Formmassen) auf Basis phosphinathaltiger Flammschutzsysteme zur Verfügung zu stellen, die eine hohe thermische Stabilität und gute mechanische Eigenschaften aufweisen, sowohl UL 94 V-0 bis hin zu 0,4 mm Wandstärke des Prüfkörpers als auch die Glühdrahtanforderungen Glow Wire Flammability Index (GWFI) 960 °C und GWIT 775 °C bei allen geprüften Wandstärken sicher erfüllen, keine Migrationseffekte zeigen und gute Fließfähigkeit sowie hohe elektrische Werte (Comparative Tracking Index (CTI) > 550 V) zeigen.

Es wurde nun überraschend gefunden, dass die Glühdrahtbeständigkeit von phosphinathaltigen flammgeschützten thermoplastischen Polyamiden deutlich verbessert werden kann, wenn die Formmasse zusätzlich zu den Phosphinaten (Komponente B)) ein Salz der phosphorigen Säure (auch als Phosphonsäure bezeichnet) HP(=O)(OH)₂ (Komponente C)) und ein Kondensationsprodukt des Melamins (Komponente D)) enthält. Bei dieser speziellen Kombination bleibt das ausgeglichene Eigenschaftsprofil der Polyamide hinsichtlich elektrischer und mechanischer Eigenschaften weitgehend erhalten. Die so erhaltenen Formmassen zeigen überraschenderweise keine Migration der verwendeten Flammschutzmittel. Darüber hinaus enthält die Polyamid-Zusammensetzung (Formmasse) als Komponente E) Füll- und/oder Verstärkungsstoffe.

Die Verarbeitung von thermoplastischen Kunststoffen erfolgt überwiegend in der Schmelze. Die damit verbundenen Struktur- und Zustandsänderungen übersteht kaum ein Kunststoff, ohne sich in seiner chemischen Struktur zu verändern. Vernetzungen, Oxidation, Molekulargewichtsänderungen und damit auch Änderungen der physikalischen und technischen Eigenschaften können die Folge sein. Um die Belastung der Polymere während der Verarbeitung zu reduzieren, setzt man je nach Kunststoff unterschiedliche Additive ein.

Oft werden unterschiedlicher Additive gleichzeitig verwendet, von denen jedes eine bestimmte Aufgabe übernimmt. So werden Antioxidantien und Stabilisatoren eingesetzt, damit der Kunststoff ohne chemische Schädigung die Verarbeitung übersteht und anschließend lange Zeit gegen äußere Einflüsse wie Hitze, UV-Licht, Witterung und Sauerstoff (Luft) stabil ist. Neben der Verbesserung des Fließverhaltens verhindern Gleitmittel ein zu starkes Kleben der Kunststoffschmelze an heißen Maschinenteilen und wirken als Dispergiermittel für Pigmente, Füll- und Verstärkungsstoffe.

Durch die Verwendung von Flammschutzmitteln kann die Stabilität von Kunststoffen bei der Verarbeitung in der Schmelze beeinflusst werden. Flammschutzmittel müssen häufig in hohen Dosierungen zugesetzt werden, um eine ausreichende Flammwidrigkeit des Kunststoffs nach internationalen Normen sicherzustellen. Aufgrund ihrer chemischen Reaktivität, die für die Flammschutzwirkung bei hohen Temperaturen erforderlich ist, können Flammschutzmittel die Verarbeitungsstabilität von Kunststoffen beeinträchtigen. Es kann beispielsweise zu verstärktem Polymerabbau, zu Vernetzungsreaktionen, zu Ausgasungen oder zu Verfärbungen kommen.

Polyamide werden z. B. durch kleine Mengen von Kupferhalogeniden sowie aromatischen Aminen und sterisch gehinderten Phenole stabilisiert, wobei die Erzielung einer langfristigen Stabilität bei hohen Dauergebrauchstemperaturen im Vordergrund steht (H. Zweifel (Ed.): "Plastics Additives Handbook", 5th Edition, Carl Hanser Verlag, München, 2000, Seiten 80 bis 84).

Die erfindungsgemäße Polyamidzusammensetzung kann als Komponente F) ein Phosphonit oder ein Phosphit oder ein Phosphonit/Phosphit-Gemisch und als Komponente G) einen Ester oder ein Salz von langkettigen aliphatischen Carbonsäuren (Fettsäuren), die Kettenlängen von C₁₄ bis C₄₀ aufweisen, enthalten.

Gegenstand der Erfindung ist daher eine halogenfreie, flammhemmende Polyamidzusammensetzung, enthaltend
als Komponente A) 15 bis 89,9 Gew.-% eines oder mehrere thermoplastische Polyamide, als Komponente B) 5 bis 20 Gew.-% eines Dialkylphosphinsäuresalzes der Formel (I) 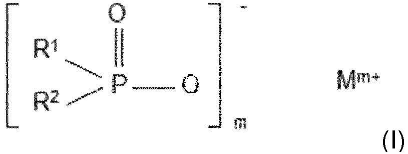 worin
- R¹ und R²: gleich oder verschieden sind und C₁-C₁₈-Alkyl linear, verzweigt oder cyclisch,
- M: Mg, Ca, Al, Sb, Sn, Ge, Ti, Zn, Fe, Zr, Ce, Bi, Sr, Mn, Li, Na, K und/oder eine protonierte Stickstoffbase;
- m: 1 bis 4;
- n: 1 bis 4;
bedeuten,
als Komponente C) 2 bis 10 Gew.-% eines Salzes der phosphorigen Säure als Komponente D) 2 bis 10 Gew.-% eines oder mehrerer Kondensationsprodukte vom Melamin,
als Komponente E) 1 bis 50 Gew.-% Füll- und/oder Verstärkungsstoff,
als Komponente F) 0 bis 2 Gew.-% Phosphit der Formel P(OR^{a})₃, wobei R^{a} gleich oder verschieden ist und C₁-C₁₈-Alkyl linear, verzweigt oder cyclisch, C₆-C₁₈-Aryl, C₇-C₁₈-Arylalkyl und/oder C₇-C₁₈-Alkylaryl bedeutet, oder Phosphonit oder Mischungen davon und als Komponente G) 0,1 bis 1 Gew.-% eines Esters oder Salzes von langkettigen aliphatischen Carbonsäuren (Fettsäuren), die Kettenlängen von C₁₄ bis C₄₀ aufweisen, wobei die Summe der Komponenten immer 100 Gew.-% beträgt und wobei es sich bei den thermoplastischen Polyamiden der Komponente A) um die Polyamide PA 6T/66, PA 6T/6, PA 4T, PA 9T und/oder PA 10T handelt.

Die flammhemmende Polyamidzusammensetzung enthält
15 bis 89,9 Gew.-% Komponente A),
5 bis 20 Gew.-% Komponente B),
2 bis 10 Gew.-% Komponente C),
2 bis 20 Gew.-% Komponente D),
1 bis 50 Gew.-% Komponente E),
0 bis 2 Gew.-% Komponente F) und
0,1 bis 1 Gew.-% Komponente G).

Bevorzugt enthält die flammhemmende Polyamidzusammensetzung
15 bis 75,8 Gew.-% Komponente A),
5 bis 20 Gew.-% Komponente B),
2 bis 10 Gew.-% Komponente C),
2 bis 10 Gew.-% Komponente D),
15 bis 35 Gew.-% Komponente E),
0,1 bis 1 Gew.-% Komponente F) und
0,1 bis 1 Gew.% Komponente G).

Insbesondere bevorzugt enthält die flammhemmende Polyamidzusammensetzung
35 bis 65,8 Gew.-% Komponente A),
5 bis 20 Gew.-% Komponente B),
2 bis 7 Gew.-% Komponente C),
2 bis 7 Gew.-% Komponente D),
25 bis 35 Gew.-% Komponente E),
0,1 bis 5 Gew.-% Komponente F) und
0,1 bis 5 Gew.% Komponente G).

Bevorzugt weist die flammhemmende Polyamidzusammensetzung einen Comparative Tracking Index (CTI) gemessen nach der International Electrotechnical Commission Standard IEC-60112/3 von größer als 550 Volt auf.

Bevorzugt erreicht die flammhemmende Polyamidzusammensetzung eine Bewertung von V-0 nach UL-94 bei einer Dicke des Probenkörpers von 3.2 mm bis 0,4 mm.

Bevorzugt weist die flammhemmende Polyamidzusammensetzung einen Glow Wire Flammability Index (GWFI) nach IEC-60695-2-12 von 960 °C bei einer Dicke des Probenkörpers von 0,4 bis 3 mm auf.

Bevorzugt weist die flammhemmende Polyamidzusammensetzung einen Glow Wire Ignition Temperature Index (GWIT) nach IEC-60695-2-13 von 750 °C oder mehr bei einer Dicke des Probenkörpers von 0,4 bis 3 mm auf.

Das Polyamid (PA) wird ausgewählt aus der Gruppe PA 6T/66, PA 6T/6, PA 4T, PA 9T, PA 10T, sowie Kombinationen davon.

Bei Komponente A) handelt es sich also um die Polyamide PA 6T/66, PA 6T/6, PA 4T, PA 9T und/oder PA 10T.

Bevorzugt handelt es sich bei Komponente D) um Melam, Melem und/oder Melon.

Besonders bevorzugt handelt es sich bei Komponente D) um Melem.

Bevorzugt sind bei der Komponente B) R¹, R² gleich oder verschieden und bedeuten Methyl, Ethyl, n-Propyl, iso-Propyl, n-Butyl, tert.-Butyl und/oder n-Pentyl

Bevorzugt entspricht das Salz der phosphorigen Säure (Komponente C)) der allgemeinen Formel (II)

[HP(=O)O₂]²⁻ M ^{m+} (II)

worin
- M: Mg, Ca, Al, Sb, Sn, Ge, Ti, Zn, Fe, Zr, Ce, Bi, Sr, Mn, Li, Na und/oder K bedeutet.

Bevorzugt handelt es sich bei dem Salz der phosphorigen Säure (Komponente C)) um Aluminiumphosphit Al(H₂PO₃)₃, sekundäres Aluminiumphosphit Al₂(HPO₃)₃, Aluminiumphosphittetrahydrat Al₂(HPO₃)₃*4aq, Aluminiumphosphonat, basisches Aluminiumphosphit Al(OH)(H₂PO₃)₂*2aq, Al₇(HPO₃)₉(OH)₆(1,6-Hexandiamin)_{1,5}*12H₂O, Al₂(HPO₃)₃*xAl₂O₃*nH₂O mit x = 1 - 2,27 und n = 1 - 50 und/oder Al₄H₆P₁₆O₁₈ .

Bevorzugt handelt es sich bei dem Salz der phosphorigen Säure auch um Aluminiumphosphite der Formeln (III), (IV) und/oder (V), wobei

Formel (III): Al₂(HPO₃)₃ x (H₂O)q

umfasst und
- q: 0 bis 4 bedeutet

Formel (IV): Al_{2,00}M_{z}(HPO₃)_{y}(OH)ᵥ x (H₂O)_{w}

umfasst und
- M: Alkalimetallionen,
- z: 0,01 bis 1,5,
- y: 2,63 bis 3,5,
- v: 0 bis 2 und
- w: 0 bis 4 bedeutet;

Formel (V): Al_{2,00}(HPO₃)ᵤ(H₂PO₃)ₜ × (H₂O)ₛ

umfasst und
- u: 2 bis 2,99 und
- t: 2 bis 0,01 und
- s: 0 bis 4 bedeutet,
und/oder es handelt sich um Mischungen von Aluminiumphosphit der Formel (III) mit schwerlöslichen Aluminiumsalzen und stickstofffreien Fremdionen, Mischungen von Aluminiumphosphit der Formel (V) mit Aluminiumsalzen, um Mischungen von Aluminiumphosphiten der Formeln (III), (IV) und/oder (V) mit Aluminiumphosphit [Al(H₂PO₃)₃], mit sekundärem Aluminiumphosphit [Al₂(HPO₃)₃], mit basischem Aluminiumphosphit [Al(OH)(H₂PO₃)₂*2aq], mit Aluminiumphosphittetrahydrat [Al₂(HPO₃)₃*4aq], mit Aluminiumphosphonat, mit Al₇(HPO₃)₉(OH)₆(1,6-Hexandiamin)_{1,5}*12H₂O, mit Al₂(HPO₃)₃*xAl₂O₃*nH₂O mit x = 1 - 2,27 und n = 1 - 50 und/oder mit Al₄HrP₁₆O₁₈.

Bevorzugt weist die Komponente C) eine mittlere Teilchengröße von 0,2 bis 100 µm auf.

Bevorzugt handelt es sich bei dem verstärkenden Füll- oder Verstärkungsstoff (Komponente E)) um Glasfasern.

Bevorzugt werden als Komponente F Phosphite der Formel (IX) eingesetzt,

P(OR^{a})₃ (IX),

wobei R^{a} die oben definierte Bedeutung besitzt.

Bevorzugt handelt es sich bei den Phosphoniten um solche der allgemeinen Struktur

R-[P(OR⁵)₂]ₘ (VI)

wobei
- R: ein ein- oder mehrwertiger aliphatischer, aromatischer oder heteroaromatischer organischer Rest ist und
- R⁵: eine Verbindung der Struktur (VII) 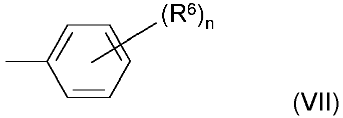
ist oder die beiden Reste R⁵ eine verbrückende Gruppe der Struktur (VIII) bilden 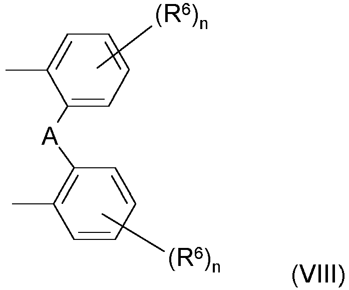 mit
- A: direkter Bindung, O, S, C₁₋₁₈-Alkylen (linear oder verzweigt), C₁₋₁₈-Alkyliden (linear oder verzweigt), in denen
- R⁶: unabhängig voneinander C₁₋₁₂-Alkyl (linear oder verzweigt), C₁₋₁₂-Alkoxy und/oder C₅₋₁₂-Cycloalkyl bedeuten und
- n: 0 bis 5 sowie
- m: 1 bis 4 bedeutet.

Bevorzugt handelt es sich bei der Komponente G) um Alkali-, Erdalkali-, Aluminium- und/oder Zinksalze von langkettigen Fettsäuren mit 14 bis 40 C-Atomen und/oder um Umsetzungsprodukte von langkettigen Fettsäuren mit 14 bis 40 C-Atomen mit mehrwertigen Alkoholen, wie Ethylenglykol, Glycerin, Trimethylolpropan und/oder Pentaerythrit.

Die erfindungsgemäße flammhemmende Polyamidzusammensetzung nach einem oder mehreren der Ansprüche 1 bis 16 kann weiterhin Telomere enthalten.

Telomere im engeren Sinne können entstehen durch die mehrfache Addition von Olefinen (Ethylen, Propylen) an die Phosphorsäurequelle (H₃PO₂, Natriumhypophosphit).

Bevorzugt handelt es sich bei den Telomeren dann um solche der Formel (X)

H- (C_{w}H_{2w})ₖ P(O)(OM) (CₓH₂ₓ)ₗ-H (X)

wobei in Formel (X), unabhängig voneinander,
- k: 1 bis 9,
- l: 1 bis 9,
- w: 2 bis 9,
- x: 2 bis 9,
- M: Mg, Ca, Al, Sb, Sn, Ge, Ti, Fe, Zr, Zn, Ce, Bi, Sr, Mn, Li, Na, K und/oder eine protonierte Stickstoffbase bedeutet
und die Gruppen (C_{w}H_{2w})ₖ und (CₓH₂ₓ)ₗ geradlinig oder verzweigt sein können;

Bevorzugt handelt es sich bei den Telomeren um Metallsalze der Ethylbutylphosphinsäure, Dibutylphosphinsäure, Ethylhexylphosphinsäure, Butylhexylphosphinsäure, Ethyloctylphosphinsäure, sec-Butylethylphosphinsäure, 1-Ethylbutyl-Butyl-phosphinsäure, Ethyl-1-Methylpentyl-phosphinsäure, Di-sec-Butylphosphinsäure (Di-1-Methyl-propylphosphinsäure), Propyl-Hexylphosphinsäure, Dihexylphosphinsäure, Hexyl-Nonylphosphinsäure, Propyl-Nonylphosphinsäure, Dinonylphosphinsäure, Dipropylphosphinsäure, Butyl-Octylphosphinsäure, Hexyl-Octylphosphinsäure, Dioctylphosphinsäure,

Telomere im weiteren Sinne können auch entstehen durch die Addition der Phosphorsäurequelle an organische Radikale, die z. B. entstehen können aus radikalinitiator und Lösungsmittel

Dann handelt es sich bei den Telomeren um solche der Formel (XI) 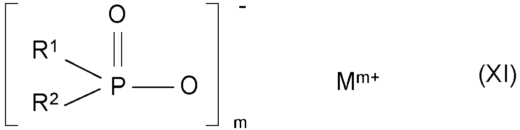 worin
- R¹, R²: gleich oder verschieden sind und, C₆-C₁₀-Arylen, C₇-C₂₀-Alkylarylen, C₇-C₂₀-Arylalkylen und/oder C₃-C₁₆-Cycloalkyl oder -Bicycloalkyl,
- M: Mg, Ca, Al, Sb, Sn, Ge, Ti, Fe, Zr, Zn, Ce, Bi, Sr, Mn, Li, Na, K und/oder eine protonierte Stickstoffbase bedeutet.

Bevorzugt bedeuten in Formel (X)
w und x jeweils 2 bis 4 und
k und l jeweils 1 bis 4.

Besonders bevorzugt bedeuten in Formel (X)
w und x jeweils 2 oder 3 und
k und l jeweils 1 bis 3
bedeuten.

Bevorzugt bedeuten in Formel (X) und/oder (XI) M unabhängig voneinander jeweils Al, Ti, Fe oder Zn.

Bevorzugt handelt es sich bei den Telomeren um Metallsalze der Ethyl(cyclopentylethyl)phosphinsäure, Butyl(cyclopentylethyl)phosphininsäure, Ethyl(cyclohexylethyl)phosphinsäure, Butyl(cyclohexylethyl)phosphinsäure, Ethyl(phenylethyl)phosphinsäure, Butyl(phenylethyl)phosphinsäure, Ethyl(4-methylphenylethyl)phosphinsäure, Ethylphenylphosphinsäure Butyl(4-methylphenylethyl)phosphinsäure, Butylcyclopentylphosphininsäure, Butylcyclohexylethylphosphinsäure, Butylphenylphosphinsäure, Ethyl(4-methylphenyl)phosphinsäure und/oder Butyl(4-methylphenyl)phosphinsäure, wobei das Metall des Metallsalzes aus der Gruppe Mg, Ca, Al, Sb, Sn, Ge, Ti, Fe, Zr, Zn, Ce, Bi, Sr, Mn, Li, Na und/oder K entstammt.

Telomere im weiteren Sinne können auch entstehen durch die Addition der Phosphorsäurequelle an organische Radikale die z. B. im Zuge des Zerfalls von Photoinitiatoren entstehen.

Hydroxymethylethyl-Ethylphosphinsäure, 1-Hydroxy-1-Methylpropyl-Ethylphosphinsäure, Butyl-ethylphosphonsäureester, Acyl-Ethylphosphonsäureanhydrid, Butyl-Ethylphosphonsäure, Butylethylphosphinsäure, Ethylphosphinylisobutyronitril (1-Cyano-1-methylethyl-Ethylphosphinsäure), Propylethylphosphinäsure, t-Butyl-Ethylphosphonsäureester, t-Butyl-Ethylphosphinsäure, Ethylphosphinylessigsäure, Hydroxymethylbutyl-Ethylphosphinsäure, 3-Hydroxy-3-methylpentyl-Ethylphosphinäsure, Propoxyethyl-Ethylphosphinsäure, Phenylethyl-Ethylphosphinsäure, 2-Ethylphosphinylethyl-Laurylsäureester, Ethylpentylphosphinsäure, t-Butoxyethyl-Ethylphosphinsäure, Ethylphosphinylisohexansäurenitril, Hexylethylphosphinsäure, Ethylphosphinylethylsulfat, Ethylphosphinylbuttersäure.

Die Erfindung betrifft auch einen dreidimensionalen Artikel umfassend die flammhemmende Polyamidzusammensetzung nach einem oder mehreren der Ansprüche 1 bis 16, dadurch gekennzeichnet, dass es sich hierbei um Formkörper, Spritzgussteile, Extrusionsmassen und/oder Extrusionsteile handelt.

Die Erfindung betrifft zudem die Verwendung einer flammhemmenden Polyamidzusammensetzung nach einem oder mehreren der Ansprüche 1 bis 16 in oder für Steckverbinder, stromberührten Teilen in Stromverteilern (FI-Schutz), Platinen, Vergußmassen, Stromsteckern, Schutzschaltern, Lampengehäuse, LED Gehäuse, Kondensatorgehäuse, Spulenkörper und Ventilatoren, Schutzkontakte, Stecker, in/auf Platinen, Gehäuse für Stecker, Kabel, flexible Leiterplatten, Ladekabel für Handys, Motorabdeckungen, Textilbeschichtungen und anderen Produkten.

Überraschenderweise wurde gefunden, dass die erfindungsgemäßen flammhemmenden Polyamidzusammensetzungen eine gute Flammschutzwirkung (V-0 und GWFI/GWIT) aufweisen kombiniert mit einer verbesserten Fließfähigkeit, hoher thermischer Stabilität und hoher Schlagzähigkeit. Der Polymerabbau wird verhindert bzw. sehr stark reduziert und es werden keine Formbeläge und keine Ausblühungen beobachtet. Die erfindungsgemäßen flammhemmenden Polyamidzusammensetzungen zeigen zudem nur geringe Verfärbung bei der Verarbeitung in der Schmelze.

Als Komponente A) enthalten die Zusammensetzungen erfindungsgemäß mindestens ein thermoplastisches Polyamid gemäß Anspruch 1.

Unter thermoplastischen Polyamiden werden in Anlehnung an Hans Domininghaus in "Die Kunststoffe und ihre Eigenschaften", 5. Auflage (1998), Seite 14 , Polyamide verstanden, deren Molekülketten keine oder auch mehr oder weniger lange und in der Anzahl unterschiedliche Seitenverzweigungen aufweisen, die in der Wärme erweichen und nahezu beliebig formbar sind.

Die erfindungsgemäß bevorzugten Polyamide können nach verschiedenen Verfahren hergestellt und aus sehr unterschiedlichen Bausteinen synthetisiert werden und im speziellen Anwendungsfall allein oder in Kombination mit Verarbeitungshilfsmitteln, Stabilisatoren oder auch polymeren Legierungspartnern, bevorzugt Elastomeren, zu Werkstoffen mit speziell eingestellten Eigenschaftskombinationen ausgerüstet werden. Geeignet sind auch Blends mit Anteilen von anderen Polymeren, bevorzugt von Polyethylen, Polypropylen, ABS, wobei ggf. ein oder mehrere Kompatibilisatoren eingesetzt werden können. Die Eigenschaften der Polyamide lassen sich durch Zusatz von Elastomeren verbessern, z. B. im Hinblick auf die Schlagzähigkeit, insbesondere wenn es verstärkte Polyamide sind. Die Vielzahl der Kombinationsmöglichkeiten ermöglicht eine sehr große Zahl von Produkten mit unterschiedlichsten Eigenschaften.

Zur Herstellung von Polyamiden sind eine Vielzahl von Verfahrensweisen bekannt, wobei je nach gewünschtem Endprodukt unterschiedliche Monomerbausteine, verschiedene Kettenregler zur Einstellung eines angestrebten Molekulargewichtes oder auch Monomere mit reaktiven Gruppen für später beabsichtigte Nachbehandlungen eingesetzt werden.

Die technisch relevanten Verfahren zur Herstellung von Polyamiden laufen meist über die Polykondensation in der Schmelze. In diesem Rahmen wird auch die hydrolytische Polymerisation von Lactamen als Polykondensation verstanden.

Bevorzugt geeignet sind auch aromatische Polyamide ausgehend von m-Xylol, Diamin und Adipinsäure; Polyamide, hergestellt aus Hexamethylendiamin und Iso- und/oder Terephthalsäure und gegebenenfalls einem Elastomer als Modifikator, z. B. Poly-2,4,4-trimethylhexamethylen-terephthalamid oder Poly-m-phenylenisophthalamid, Blockcopolymere der vorstehend genannten Polyamide mit Polyolefinen, Olefin-Copolymeren, lonomeren oder chemisch gebundenen oder gepfropften Elastomeren, oder mit Polyethern, wie z. B. mit Polyethylenglykol, Polypropylenglykol oder Polytetramethylenglykol. Ferner mit EPDM oder ABS modifizierte Polyamide oder Copolyamide; sowie während der Verarbeitung kondensierte Polyamide ("RIM-Polyamidsysteme").

In einer bevorzugten Ausführungsform enthalten die erfindungsgemäßen Zusammensetzungen neben dem erfindungsgemäß einzusetzenden thermoplastischen Polyamid wenigstens ein weiteres thermoplastisches Polymer, besonders bevorzugt wenigstens ein anderes Polyamid.

Bevorzugt sind PA 6T/66 und PA 6T/6.

Den neben dem thermoplastischen Polyamid in einer bevorzugten Ausführungsform zusätzlich einzusetzenden Polymeren können übliche Additive, insbesondere Entformungsmittel, Stabilisatoren und/oder Fließhilfsmittel in der Schmelze zugemischt oder auf der Oberfläche aufgebracht werden.

Ausgangsstoffe für die thermoplastischen Polyamide der Komponente A) können synthetisch z. B. aus petrochemischen Rohstoffen und/oder über chemische oder biochemische Prozesse aus nachwachsenden Rohstoffen hervorgegangen sein.

Auch andere hier nicht speziell erwähnte Flammschutzmittel oder Flammschutzmittelsynergisten können zum Einsatz kommen. Insbesondere stickstoffhaltige Flammschutzmittel wie Melamincyanurat, Melaminphosphate und Melaminpolyphosphate können zugesetzt werden. Es können auch weitere Phosphorflammschutzmittel wie Arylphosphate oder roter Phosphor verwendet werden. Ferner können auch Salze aliphatischer und aromatischer Sulfonsäuren und mineralische Flammschutzadditive wie Aluminium- und/oder Magnesiumhydroxid, Ca-Mg-Carbonat-Hydrate (z. B. DE-A-4236122 ) eingesetzt werden. In Frage kommen ferner Flammschutzmittelsynergisten aus der Gruppe der sauerstoff-, stickstoff- oder schwefelhaltigen Metallverbindung, bevorzugt Zinkoxid, Zinkborat, Zinkstannat, Zinkhydroxystannat, Zinksulfid, Molybdänoxid, Titandioxid, Magnesiumoxid, Magnesiumcarbonat, Calciumcarbonat, Calciumoxid, Titannitrid, Bornitrid, Magnesiumnitrid, Zinknitrid, Zinkphosphat, Calciumphosphat, Calciumborat, Magnesiumborat oder deren Mischungen.

Weitere bevorzugt geeignete Flammschutzadditive sind Kohlebildner, besonders bevorzugt Phenol-Formaldehydharze, Polycarbonate, Polyimide, Polysulfone, Polyethersulfone oder Polyetherketone sowie Antitropfmittel, insbesondere Tetrafluorethylenpolymerisate.

Die Flammschutzmittel können in Reinform, sowie über Masterbatche oder Kompaktate zugesetzt werden.

Bevorzugt handelt es sich bei Komponente B um das Aluminium- oder das Zinksalz der Diethylphosphinsäure.

Bevorzugt bedeutet beim Aluminiumphosphit der Formel (III)
- q: 0,01 bis 0,1.

Bevorzugt bedeutet beim Aluminiumphosphit der Formel (IV)
- z: 0,15 bis 0,4;
- y: 2,80 bis 3;
- v: 0,1 bis 0,4 und
- w: 0,01 bis 0,1.

Bevorzugt bedeutet beim Aluminiumphosphit der Formel (V)
- u: 2,834 bis 2,99;
- t: 0,332 bis 0,03 und
- s: 0,01 bis 0,1.

Bevorzugt handelt es sich bei den kondensierten Melaminverbindungen um Melam oder Melem.

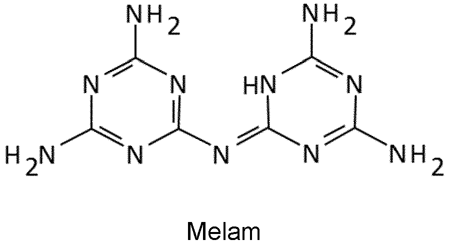

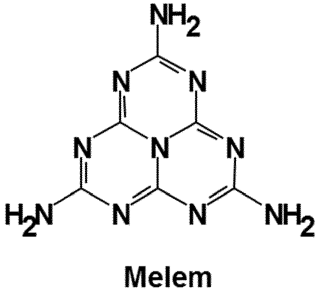

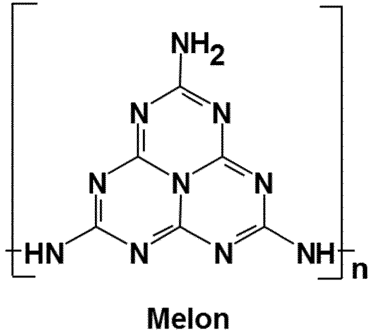

Als Komponente E) enthalten die erfindungsgemäßen flammhemmenden Polyamidzusammensetzungen mindestens einen Füllstoff oder Verstärkungsstoff.

Dabei können auch Mischungen aus zwei oder mehreren unterschiedlichen Füllstoffen und/oder Verstärkungsstoffen, bevorzugt auf Basis von Talk, Glimmer, Silikat, Quarz, Titandioxid, Wollastonit, Kaolin, amorphe Kieselsäuren, nanoskalige Mineralien, besonders bevorzugt Montmorillonite oder Nano-Böhmit, Magnesiumcarbonat, Kreide, Feldspat, Bariumsulfat, Glaskugeln und/oder faserförmige Füllstoffe und/oder Verstärkungsstoffen auf der Basis von Kohlenstofffasern und/oder Glasfasern eingesetzt werden. Bevorzugt werden mineralische teilchenförmige Füllstoffe auf der Basis von Talk, Glimmer, Silikat, Quarz, Titandioxid, Wollastonit, Kaolin, amorphe Kieselsäuren, Magnesiumcarbonat, Kreide, Feldspat, Bariumsulfat und/oder Glasfasern eingesetzt. Besonders bevorzugt werden mineralische teilchenförmige Füllstoffe auf der Basis von Talk, Wollastonit, Kaolin und/oder Glasfasern eingesetzt, wobei Glasfasern ganz besonders bevorzugt sind.

Besonders bevorzugt werden ferner auch nadelförmige mineralische Füllstoffe eingesetzt. Unter nadelförmigen mineralischen Füllstoffen wird erfindungsgemäß ein mineralischer Füllstoff mit stark ausgeprägtem nadelförmigen Charakter verstanden. Bevorzugt seien nadelförmige Wollastonite genannt. Bevorzugt weist das Mineral ein Länge zu Durchmesser - Verhältnis von 2:1 bis 35:1, besonders bevorzugt von 3:1 bis 19:1, insbesondere bevorzugt von 4:1 bis 12:1 auf. Die mittlere Teilchengröße der erfindungsgemäß einsetzbaren nadelförmigen Mineralien liegt bevorzugt bei kleiner 20 µm, besonders bevorzugt bei kleiner 15 µm, insbesondere bevorzugt bei kleiner 10 µm, bestimmt mit einem CILAS Granulometer.

Der Füllstoff und/oder Verstärkungsstoff kann in einer bevorzugten Ausführungsform oberflächenmodifiziert sein, vorzugsweise mit einem Haftvermittler bzw. Haftvermittlersystem, besonders bevorzugt auf Silanbasis. Die Vorbehandlung ist jedoch nicht unbedingt erforderlich. Insbesondere bei Verwendung von Glasfasern können zusätzlich zu Silanen auch Polymerdispersionen, Filmbildner, Verzweiger und/oder Glasfaserverarbeitungshilfsmittel verwendet werden.

Die erfindungsgemäß ganz besonders bevorzugt als Komponente E) einzusetzenden Glasfasern, die im Allgemeinen einen Faserdurchmesser zwischen 7 und 18 µm, bevorzugt zwischen 9 und 15 µm haben, werden als Endlosfasern oder als geschnittene oder gemahlene Glasfasern zugesetzt. Diese Fasern können mit einem geeigneten Schlichtesystem und einem Haftvermittler bzw. Haftvermittlersystem, bevorzugt auf Silanbasis, ausgerüstet sein.

Die erfindungsgemäßen Polyamidzusammensetzungen können noch weitere Additive enthalten. Bevorzugte Additive im Sinne der vorliegenden Erfindung sind Antioxdantien, UV-Stabilisatoren, Gammastrahlenstabilisatoren, Hydrolysestabilisatoren, Antistatika, Emulgatoren, Nukleierungsmittel, Weichmacher, Verarbeitungshilfsmittel, Schlagzähmodifikatoren Farbstoffe und Pigmente. Die Additive können alleine oder in Mischung bzw. in Form von Masterbatchen eingesetzt werden.

Geeignete Antioxidantien sind beispielsweise alkylierte Monophenole, z. B. 2,6-Di-tert-butyl-4-methylphenol; Alkylthiomethylphenole, z. B. 2,4-Di-octylthiomethyl-6-tert-butylphenol; Hydrochinone und alkylierte Hydrochinone, z. B. 2,6-Di-tert-butyl-4-methoxyphenol; Tocopherole, z. B. α-Tocopherol, β-Tocopherol, γ-Tocopherol, δ-Tocopherol und Mischungen davon (Vitamin E); Hydroxylierte Thiodiphenylether, z. B. 2,2'-Thio-bis(6-tert-butyl-4-methylphenol), 2,2'-Thio-bis(4-octylphenol), 4,4'-Thio-bis-(6-tert-butyl-3-methylphenol), 4,4'-Thio-bis-(6-tert-butyl-2-methylphenol), 4,4'-Thio-bis-(3,6-di-sec.-amylphenol), 4,4'-Bis-(2,6-di-methyl-4-hydroxyphenyl)-disulfic; Alkyliden-Bisphenole, z. B. 2,2'-Methylen-bis-(6-tert-butyl-4-methylphenol;
O-, N- und S-Benzylverbindungen, z. B. 3,5,3',5'-Tetra-tert-butyl-4,4'-dihydroxydibenzylether; Hydroxybenzylierte Malonate, z. B. Dioctadecyl-2,2-bis-(3,5-di-tert-butyl-2-hydrorybenzyl)-malonat; Hydroxybenzyl-Aromaten, z. B. 1,3,5-Tris-(3,5-di-tert-buty)-4-hydroxybenzyl)-2,4,6-trimethylbenzo1, 1,4-Bis-(3,5-di-tert-butyl-4-hydroxybenzyl)-2,3,5,6-tetramethylbenzot 2,4,6-Tris-(3,5-di-tert-buryl-4-hydroxybenzyl)-phenol; Triazinverbindungen, z. B. 2,4-Bis-octylmercapto-6(3,5-di-tert-butyl-4-hydroxyanilino)-1,3,5-triazin; Benzylphosphonate, z. B. Dimethyl-2,5-di-tert-butyl-4-hydroxybenzylphosphonat; Acylaminophenole, 4-Hydroxylaurinsäureamid, 4 Hydroxystearinsäureanilid, N-(3,5-di-tert-butyl-4-hydroxyphenyl)-carbaminsäureoctylester; Ester der β-(3.5-Di-tert-butyl-4-hydroxyphenyl)-propionsäure mit ein- oder mehr-wertigen Alkoholen; Ester der β -(5-tert-Butyl-4-hydroxy-3-methylphenyl)-propionsäure mit ein- oder mehrwertigen Alkoholen; Ester der β-(3,5-Dicyclohexyl-4-hydroxyphenyl)-propionsäure mit ein- oder mehrwertigen Alkoholen; Ester der 3,5-Di-tert-butyl-4-hydroxyphenylessigsäure mit ein- oder mehrwertigen Alkoholen; Amide der β-(3,5-Di-tert-butyl-4-hydroxyphenyl)-propionsäure, wie z. B. N,N' Bis-(3,5-di-tert-butyl4-hydroxyphenylpropionyl)-hexamethylendiamin, N,N'-Bis-(3,5-di-tert-butyl-4-hydroxyphenylpropionyl)-trimethylendiamin, N,N'-Bis-(3,5-di-tert-butyl-4-hydroxyphenylpropionyl)-hydrazin.

Besonders bevorzugt werden sterisch gehinderte Phenole alleine oder in Kombination mit Phosphiten eingesetzt, wobei die Verwendung von N,N'-Bis[3-(3',5'-di-tert-butyl-4'-hydroxyphenyl)propionyl]hexamethylenediamine (z. B. Irganox^{®} 1098 der Fa. BASF SE, Ludwigshafen. Deutschland) ganz besonders bevorzugt ist.

Geeignete UV-Absorber und Lichtschutzmittel sind beispielsweise 2-(2'-Hydroxyphenyl)-benzotriazole, wie z. B. 2-(2'-Hydroxy-5'-methylphenyl)-benzotriazol;
2-Hydroxybenzophenone, wie z. B. das 4-Hydroxy, 4-Methoxy, 4-Octoxy, 4-Decyloxy-, 4-Dodecyloxy-, 4-Benzyloxy-, 4,2',4-Trihydroxy-, 2'-Hydroxy-4,4'-dimethoxy-Derivat;
Ester von gegebenenfalls substituierten Benzoesäuren, wie z. B. 4-tert-Butylphenylsalicylat, Phenylsalicylat, Octylphenyl-salicylat, Dibenzoylresorcin, Bis-(4-tert-butylbenzoyl)-resorcin, Benzoylresorcin, 3,5-Di-tert-butyl-4-hydroxybenzoesäure-2,4-di-tert-butylphenylester, 3,5-Di-tert-butyl-4-hydroxybenzoesäurehexadecylester, 3,5-Di-tert-butyl-4-hydroxybenzoesäure-octadecylester, 3,5-Di-tert-butyl-4-hydroxybenzoe-säure-2-methyl-4,6-di-tert-butylphenylester; Acrylate, wie z. B. α-Cyan-β,β-diphenylacrylsäure-ethylester bzw. -isooctylester, α-Carbomethoxy-zimtsäuremethylester, α-Cyano-β-methyl-p-methoxy-zimtsäuremethyl-ester bzw. butylester, α-Carbomethoxy-p-methoxyzimtsäuremethylester, N-(β-Carbo-methoxy-β-cyanovinyl)-2-methyl-indolin.

Als Farbmittel werden bevorzugt anorganische Pigmente, insbesondere Titandioxid, Ultramarinblau, Eisenoxid, Zinksulfid oder Ruß, weiterhin organische Pigmente, bevorzugt Phthalocyanine, Chinacridone, Perylene sowie Farbstoffe, bevorzugt Nigrosin und Anthrachinone eingesetzt.

Geeignete Polyamidstabilisatoren sind z. B. Kupfersalze in Kombination mit Jodiden und/oder Phosphorverbindungen und Salze des zweiwertigen Mangans.

Geeignete basische Co-Stabilisatoren sind Melamin, Polyvinylpyrrolidon, Dicyandiamid, Triallylcyanurat, Harnstoff-Derivate, Hydrazin-Derivate, Amine, Polyamide, Polyurethane, Alkali- und Erdalkalisalze höherer Fettsäuren, beispielsweise Ca-Stearat, Zn-Stearat, Mg-Behenat, Mg-Stearat, Na-Ricinoleat, K-Palmitat, Antimonbrenzcatechinat oder Zinnbrenzcatechinat.

Geeignete Nukleierungsmittel sind z. B. 4-tert-Butylbenzoesäure, Adipinsäure und Diphenylessigsäure, Aluminiumoxid oder Siliziumdioxid sowie ganz besonders bevorzugt Talkum, wobei diese Aufzählung nicht abschließend ist.

Als Fließhilfsmittel werden bevorzugt Copolymerisate aus mindestens einem α-Olefin mit mindestens einem Methacrylsäurester oder Acrylsäureester eines aliphatischen Alkohols eingesetzt. Besonders bevorzugt sind dabei Copolymerisate, bei denen das α-Olefin aus Ethen und/oder Propen aufgebaut ist und der Methacrylsäurester oder Acrylsäureester als Alkoholkomponente lineare oder verzweigte Alkylgruppen mit 6 bis 20 C-Atomen enthält. Ganz besonders bevorzugt ist Acrylsäure-(2-ethyl)-hexylester.

Als Fließhilfsmittel erfindungsgemäß geeignete Copolymerisate zeichnen sich neben der Zusammensetzung auch durch das niedrige Molekulargewicht aus. Dementsprechend sind für die erfindungsgemäß vor thermischem Abbau zu bewahrenden Zusammensetzungen vor allem Copolymerisate geeignet, die einen Melt-Flow-Index (MFI)-Wert gemessen bei 190 °C und einer Belastung von 2,16 kg von mindestens 100 g/10 min, bevorzugt von mindestens 150 g/10 min, besonders bevorzugt von mindestens 300 g/10 min aufweisen. Der MFI dient zur Charakterisierung des Flusses einer Schmelze eines Thermoplasten und unterliegt den Normen ISO 1133 oder ASTM D 1238. Der MFI bzw. alle Angaben zum MFI im Rahmen der vorliegenden Erfindung beziehen sich bzw. wurden einheitlich nach ISO 1133 bei 190 °C und einem Prüfgewicht von 2,16 kg gemessen bzw. bestimmt.

Bevorzugt einzusetzende Weichmacher sind Phthalsäuredioctylester, Phthalsäuredibenzylester, Phthalsäurebutylbenzylester, Kohlenwasserstofföle oder N-(n-Butyl)benzolsulfonamid.

Die vorliegende Erfindung betrifft aber auch Erzeugnisse, bevorzugt Fasern, Folien oder Formkörper, erhältlich aus den erfindungsgemäß beschriebenen Zusammensetzungen durch Spritzguss oder Extrusion.

Geeignete Phosphinate (Komponente B)) sind in der PCT/WO97/39053 beschrieben. Besonders bevorzugte Phosphinate sind Aluminium-, Calcium- und Zinkphosphinate.

Bevorzugte Salze der phosphorigen Säure (Komponente C)) sind in Wasser unlösliche bzw. schwerlösliche Salze.

Besonders bevorzugte Salze der phosphorigen Säure sind das Aluminium-, das Calcium- und das Zinksalze.

Besonders bevorzugt handelt es sich bei Komponente C) um ein Umsetzungsprodukt aus phosphoriger Säure und einer Aluminiumverbindung.

Bevorzugt sind Aluminiumphosphite mit den CAS-Nummern 15099-32-8, 119103-85-4, 220689-59-8, 56287-23-1, 156024-71-4, 71449-76-8 und 15099-32-8.

Bevorzugt haben die Aluminiumphosphite Teilchengrößen von 0,2 - 100 µm.

Die Herstellung der bevorzugten Aluminiumphosphite erfolgt durch Umsetzung einer Aluminiumquelle mit einer Phosphorquelle und wahlweise einem Templat in einem Lösungsmittel bei 20 - 200 °C während einer Zeitspanne bis zu 4 Tagen. Aluminiumquelle und Phosphorquelle werden dazu 1 - 4 h vermischt, unter hydrothermalen Bedingungen oder am Rückfluss erhitzt, abfiltriert, gewaschen und z. B. bei 110 °C getrocknet.

Bevorzugte Aluminumquellen sind Aluminiumisopropoxid, Aluminiumnitrat, Aluminiumchlorid und Aluminiumhydroxid (z. B. Pseudoböhmit).

Bevorzugte Phosphorquellen sind phosphorige Säure, (saures) Ammoniumphosphit, Alkaliphosphite oder Erdalkaliphosphite.

Bevorzugte Alkaliphosphite sind Dinatriumphosphit, Dinatriumphosphithydrat, Trinatriumphosphit und Kaliumhydrogenphosphit.

Bevorzugtes Dinatriumphosphithydrat ist Brüggolen^{®} H10 der Fa. Brüggemann.

Bevorzugte Template sind 1,6-Hexandiamin, Guanidincarbonat oder Ammoniak.

Bevorzugtes Erdalkaliphosphit ist Calciumphosphit.

Das bevorzugte Verhältnis von Aluminium zu Phosphor zu Lösungsmittel ist dabei 1 : 1 : 3,7 bis 1 : 2,2 : 100 mol. Das Verhältnis von Aluminum zu Templat ist 1 : 0 bis 1 : 17 mol. Der bevorzugte pH-Wert der Reaktionslösung ist 3 bis 9. Bevorzugtes Lösungsmittel ist Wasser.

Besonders bevorzugt wird in der Anwendung das gleiche Salz der Phosphinsäure wie der phosphorigen Säure verwendet, also z. B. Aluminiumdialkylphosphinat zusammen mit Aluminiumphosphit oder Zinkdialkylphosphinat zusammen mit Zinkphosphit.

Bevorzugt handelt es sich bei der Komponente G) um Alkali-, Erdalkali-, Aluminium- und/oder Zinksalze von langkettigen Fettsäuren mit 14 bis 40 C-Atomen und/oder um Umsetzungsprodukte von langkettigen Fettsäuren mit 14 bis 40 C-Atomen mit mehrwertigen Alkoholen, wie Ethylenglykol, Glycerin, Trimethylolpropan und/oder Pentaerythrit. Besonders bevorzugt handelt es sich um Aluminium-, Calcium- oder Zinkstearat oder Calciummontanat.

Als weitere Flammschutzmittel sind bevorzugt Arylphosphate, Phosphonate, Salze der hypophosphorigen Säure sowie roter Phosphor geeignet.

Bevorzugt werden als Komponente F Phosphite der Formel (IX) eingesetzt,

P(OR^{a})₃ (IX)

wobei R^{a} die oben angegebenen Bedeutungen hat.

Bevorzugt sind bei den Phosphoniten die Reste
- R: C₄-C₁₈-Alkyl (linear oder verzweigt), C₄-C₁₈-Alkylen (linear oder verzweigt), C₅-C₁₂-Cycloalkyl, C₅-C₁₂-Cycloalkylen, C₆-C₂₄-Aryl bzw. -Heteroaryl, C₆-C₂₄-Arylen bzw. -Heteroarylen welche auch weiter substituiert sein können;
- R⁶: unabhängig voneinander C₁-C₈-Alkyl (linear oder verzweigt), C₁-C₈-Alkoxy, Cyclohexyl;
- A: direkte Bindung, O, C₁-C₈-Alkylen (linear oder verzweigt), C₁-C₈-Alkyliden (linear oder verzweigt) und
- n: 0 bis 3
- m: 1 bis 3.

Besonders bevorzugt bei den Phosphoniten sind die Reste
- R: Cyclohexyl, Phenyl, Phenylen, Biphenyl und Biphenylen
- R⁶: unabhängig voneinander C₁- C₈-Alkyl (linear oder verzweigt), C₁-C₈-Alkoxy, Cyclohexyl
- A: direkte Bindung, O, C₁₋C₆-Alkyliden (linear oder verzweigt) und
- n: 1 bis 3
- m: 1 oder 2.

Weiterhin werden Gemische von Verbindungen gem. obiger Ansprüche in Kombination mit Phosphiten beansprucht Insbesonders bevorzugt sind Verbindungen, die, basierend auf obigen Definitionen, durch eine Friedel-Crafts-Reaktion eines Aromaten oder Heteroaromaten, wie Benzol, Biphenyl- oder Diphenylether mit Phosphortrihalogeniden, bevorzugt Phosphortrichlorid, in Gegenwart eines Friedel-Crafts-Katalysators wie Aluminiumchlorid, Zinkchlorid oder Eisenchlorid. sowie nachfolgender Reaktion mit den der Strukturen (IX) und (VI) zugrundeliegenden Phenolen, hergestellt werden. Dabei werden ausdrücklich auch solche Gemische mit Phosphiten eingeschlossen, die nach der genannten Reaktionssequenz aus überschüssigem Phosphortrihalogenid und den vorstehend beschriebenen Phenolen entstehen.

Aus dieser Gruppe von Verbindungen sind wiederum die nachstehenden Strukturen (XII) und (XIII) bevorzugt: 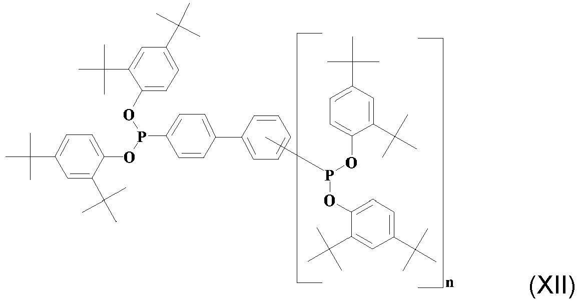 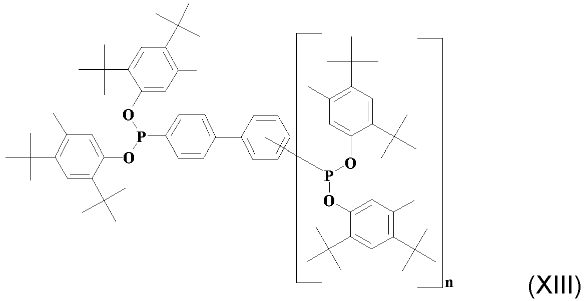 wobei n 0 oder 1 betragen kann und diese Gemische optional weiterhin noch Anteile der Verbindung (XIV) bzw. (XV) enthalten können:

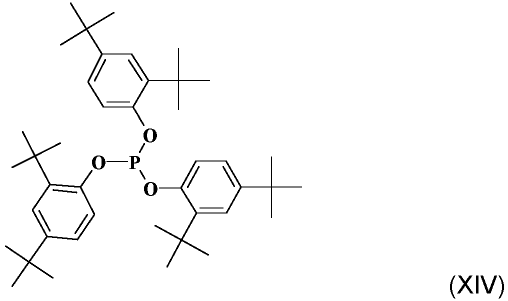

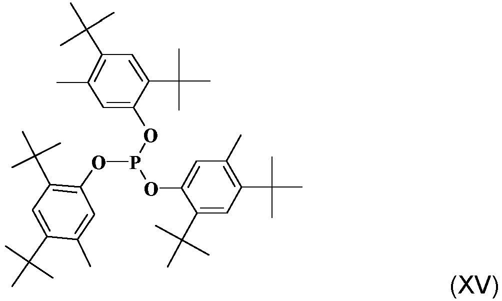

Geeignet als Komponente G) sind Ester oder Salze von langkettigen aliphatischen Carbonsäuren (Fettsäuren), die Kettenlängen von C₁₄ bis C₄₀ aufweisen. Bei den Estern handelt es sich um Umsetzungsprodukte der genannten Carbonsäuren mit gebräuchlichen mehrwertigen Alkoholen, wie z. B. Ethylenglykol, Glycerin, Trimethylolpropan oder Pentaerythrit. Als Salze der genannten Carbonsäuren kommen vor allem Alkali- oder Erdalkalisalze bzw. Aluminium- und Zinksalze in Betracht.

Bevorzugt handelt es sich bei der Komponente G) um Ester oder Salze der Stearinsäure wie z. B. Glycerinmonostearat oder Calciumstearat.

Bevorzugt handelt es sich bei der Komponente G) auch um Umsetzungsprodukte von Montanwachssäuren mit Ethylenglykol.

Bevorzugt handelt es sich bei den Umsetzungsprodukten um eine Mischung aus Ethylenglykol-Mono-Montanwachssäureester, Ethylenglykoldimontanwachssäureester, Montanwachssäuren und Ethylenglykol.

Bevorzugt handelt es sich bei der Komponente G) auch um Umsetzungsprodukte von Montanwachssäuren mit einem Calciumsalz.

Besonders bevorzugt handelt es sich bei den Umsetzungsprodukten um eine Mischung aus 1,3-Budandiol-Mono-Montanwachssäureester, 1,3-Budandiol-Di-Montanwachssäureester, Montanwachssäuren, 1,3-Butandiol, Calciummontanat und dem Calciumsalz.

Die erfindungsgemäßen Zusammensetzungen nach einem oder mehreren der Ansprüche 1 bis 16 weisen bevorzugt einen Glow Wire Ignition Temperature (GWIT), nach IEC-60695-2-13 von 775 °C oder mehr bei einer Dicke der Probenkörper von 0,4 - 3 mm auf.

Die vorgenannten Additive können in den verschiedensten Verfahrensschritten in den Kunststoff eingebracht werden. So ist es bei Polyamiden möglich, bereits zu Beginn oder am Ende der Polymerisation/Polykondensation oder in einem folgenden Compoundierprozess die Additive in die Polymerschmelze einzumischen. Weiterhin gibt es Verarbeitungsprozesse, bei denen die Additive erst später zugefügt werden. Dies wird insbesondere beim Einsatz von Pigment- oder Additivmasterbatches praktiziert. Außerdem besteht die Möglichkeit, insbesondere pulverförmige Additive auf das durch den Trocknungsprozess eventuell warme Polymergranulat aufzutrommeln.

Die Erfindung betrifft schließlich auch ein Verfahren zur Herstellung von flammgeschützten Polymer-Formkörpern, dadurch gekennzeichnet, dass erfindungsgemäße flammgeschützte Polymer-Formmassen durch Spritzgießen (z. B. Spritzgießmaschine Typ Aarburg Allrounder) und Pressen, Schaumspritzgießen, Gasinnendruck-Spritzgießen, Blasformen, Foliengießen, Kalandern, Laminieren oder Beschichten bei höheren Temperaturen zum flammgeschützten Polymer-Formkörper verarbeitet wird.

### Beispiele

1. Eingesetzte Komponenten
   Handelsübliche Polyamide (Komponente A)):
   Polyamid 6.6 (PA 6.6-GV): Ultramid^{®} A27 (Fa. BASF SE, D)
   Polyamid 6: Ultramid^{®} B27 (Fa. BASF SE, D)
   Polyamid 6T/66: Vestamid HTplus M1000 (Fa. Evonik, D)
   Polyamid 10T: Vestamid HTplus M3000 (Fa. Evonik, D)
   Komponente E): Glasfasern PPG HP 3610 mit 10 µm Durchmesser und 4,5 mm Länge (Fa. PPG, NL)
   Flammschutzmittel (Komponente B)):
      Aluminiumsalz der Diethylphosphinsäure, im Folgenden als DEPAL bezeichnet
   Flammschutzmittel (Komponente C)):
      Aluminiumsalz der phosphorigen Säure, im Folgenden als PHOPAL bezeichnet
   Flammschutzmittel (Komponente D)):
      Delacal 360 (Melam)
      Delacal 420 (Melem)
      Delacal 500 (Melon), alle Fa. Delamin Ltd, UK
   Vergleich: MPP, Melaminpolyphosphat, Melapur^{®} 200/70, FA BASF AG, D
   Phosphonite (Komponente F)): Sandostab^{®} P-EPQ, Fa. Clariant GmbH, D
   Wachskomponenten (Komponente G)):
      Licowax^{®} E, Fa. Clariant Produkte (Deutschland) GmbH, D (Ester der Montanwachssäure)
2. Herstellung, Verarbeitung und Prüfung von flammhemmenden PolyamidFormmassen

Die Flammschutzmittelkomponenten wurden in dem in der Tabelle angegebenen Verhältnis mit dem Phosphonit, den Gleitmitteln und Stabilisatoren vermischt und über den Seiteneinzug eines Doppelschnecken-Extruders (Typ Leistritz ZSE 27/44D) bei Temperaturen von 260 bis 310 °C in PA 6.6 bzw. bei 250 - 275 °C in PA 6 eingearbeitet. Die Glasfasern wurden über einen zweiten Seiteneinzug zugegeben. Der homogenisierte Polymerstrang wurde abgezogen, im Wasserbad gekühlt und anschließend granuliert.

Nach ausreichender Trocknung wurden die Formmassen auf einer Spritzgießmaschine (Typ Arburg 320 C Allrounder) bei Massetemperaturen von 250 bis 300 °C zu Prüfkörpern verarbeitet und anhand des UL 94-Tests (Underwriter Laboratories) auf Flammwidrigkeit geprüft und klassifiziert.

Nach UL 94 ergeben sich folgende Brandklassen:
V-0: kein Nachbrennen länger als 10 sec, Summe der Nachbrennzeiten bei 10 Beflammungen nicht größer als 50 sec, kein brennendes Abtropfen, kein vollständiges Abbrennen der Probe, kein Nachglühen der Proben länger als 30 sec nach Beflammungsende.
V-1: kein Nachbrennen länger als 30 sec nach Beflammungsende, Summe der Nachbrennzeiten bei 10 Beflammungen nicht größer als 250 sec, kein Nachglühen der Proben länger als 60 sec nach Beflammungsende, übrige Kriterien wie bei V-0.
V-2: Zündung der Watte durch brennendes Abtropfen, übrige Kriterien wie bei V-1.

Nicht klassifizierbar (nkl): erfüllt nicht die Brandklasse V-2.

Die Glühdrahtbeständigkeit wurde anhand der Glühdrahtprüfung GWFI (Glow-Wire Flammability-Index) nach IEC 60695-2-12 sowie an der Glühdrahtentzündlichkeitsprüfung GWIT (Glow-Wire-Ignition-Temperature) nach IEC 60695-2-13 bestimmt. Bei der GWFI-Prüfung wird an 3 Prüfkörpern (beispielsweise an Platten der Geometrie 60 X 60 X 1,5 mm) mit Hilfe eines glühenden Drahtes bei Temperaturen zwischen 550 und 960 °C die maximale Temperatur ermittelt, bei der eine Nachbrennzeit von 30 Sekunden nicht überschritten wird und die Probe nicht brennend abtropft. Bei der GWIT-Prüfung wird bei einer vergleichbaren Messprozedur die Glühdrahtentzündungstemperatur angegeben, die 25K (30K zwischen 900 °C und 960 °C) höher ist als die maximale Glühdrahttemperatur, die in 3 aufeinander folgenden Tests auch während der Einwirkzeit des Glühdrahtes nicht zur Entzündung führt. Als Entzündung gilt dabei eine Flamme mit einer Brennzeit von 5 Sekunden oder mehr.

Die Fließfähigkeit der Formmassen wurde durch Ermittlung des Schmelzvolumenindex (MVR) bei 275 °C/2,16 kg bestimmt. Höhere MVR Werte bedeuten bessere Fließfähigkeit im Spritzgussprozess. Ein starker Anstieg des MVR-Wertes kann allerdings auch auf einen Polymerabbau hindeuten.

Sämtliche Versuche der jeweiligen Serie wurden, falls keine anderen Angaben gemacht wurden, aufgrund der Vergleichbarkeit unter identischen Bedingungen (Temperaturprogramme, Schneckengeometrien, Spritzgießparameter, etc.), durchgeführt.

Die Ergebnisse, in denen die Flammschutzmittel-Stabilisator-Mischung in nicht erfindungsgemäßen Zusammensetzungen eingesetzt wurden, sind in den Beispielen B1-B3 aufgelistet. Alle Mengen sind als Gew.-% angegeben und beziehen sich auf die Kunststoff-Formmasse einschließlich der Flammschutzmittel, Additive und Verstärkungsstoffe.

**Tabelle 1: PA 66 GF 30 Versuchsergebnisse. V1-V4 sind Vergleichsbeispiele, B1 bis B3 nicht erfindungsgemäße Polyamid Formmasse**

| | | V1 | V2 | V3 | V4 | B1 | B2 | B3 |
|---|---|---|---|---|---|---|---|---|
| A: Polyamid 66 | [Gew.-%] | 49,55 | 49,55 | 49,55 | 39,55 | 39,55 | 49,30 | 49,30 |
| A: Polyamid 6 | [Gew.-%] | | | | 10 | 10 | | |
| E: Glasfasern HP3610 | [Gew.-%] | 30 | 30 | 30 | 30 | 30 | 30 | 30 |
| B: DEPAL | [Gew.-%] | 20 | 17 | 15 | 10 | 14 | 12 | 12 |
| C: PHOPAL | [Gew.-%] | | 3 | | | 3 | 3 | 3 |
| MPP | [Gew.-%] | | | | 10 | | | |
| D1: Delacal 360 | [Gew.-%] | | | 5 | | 3 | 5 | |
| D2: Delacal 420 | [Gew.-%] | | | | | | | 5 |
| G: Licowax E | [Gew.-%] | 0,25 | 0,25 | 0,25 | 0,25 | 0,25 | 0,25 | 0,25 |
| F: P-EPQ | [Gew.-%] | 0,20 | 0,20 | 0,20 | 0,20 | 0,20 | 0,20 | 0,20 |

| Messergebnisse | | | | | | | | |
|---|---|---|---|---|---|---|---|---|
| UL 94 bei 0,4 mm Dicke | | V-1 | V-0 | V-1 | V-0 | V-0 | V-0 | V-0 |
| GWFI bei 0,4 mm Dicke | [°C] | 850 | 960 | 850 | 960 | 960 | 960 | 960 |
| MVR 275 °C/2,16 kg | | 4 | 5 | 6 | 17 | 9 | 8 | 10 |
| GWIT bei 0,75 mm Dicke | [°C] | 700 | 725 | 725 | 775 | 800 | 800 | 775 |
| Farbe der Prüfkörper** | | Gelb | Gelb | Weiß | Weiß | Weiß | Weiß | Weiß |
| Ausblühungen* | | keine | keine | keine | deutlich | keine | keine | keine |
| CTI | [Volt] | 600 | 600 | 550 | 550 | 600 | 600 | 600 |
| Schlagzähigkeit | [kJ/m²] | 60 | 63 | 58 | 61 | 68 | 71 | 69 |
| Kerbschlagzähigkeit | [kJ/m²] | 12 | 11 | 11 | 10 | 14 | 14 | 12 |

| | | | | | | | | |
|---|---|---|---|---|---|---|---|---|
| * 14 Tage 100 % Feuchte 70 °C ** gelb: Yellownessindex > 20 | | | | | | | | |

Nur durch die Kombination aus Polyamid, Glasfasern, DEPAL, PHOPAL und Melam bzw. Melem werden Polyamid Formmassen erhalten, die die Brandklasse UL 94 V-0 bei 0,4 mm erreichen und gleichzeitig ein GWIT größer als 775 °C und CTI 600 Volt, Schlagzähigkeit größer 65 kJ/m², Kerbschlagzähigkeit größer 10 kJ/m² aufweisen, und keine Verfärbungen (Yellownessindex < 20) und keine Ausblühungen zeigen. Außerdem zeigen nur diese Zusammensetzungen den gewünschten Weißgrad. Durch die Verwendung von DEPAL ohne PHOPAL (V1) wird kein V-0 erreicht, durch die Kombination von DEPAL mit MPP (V4) werden zwar V-0 und GWIT 775°C erreicht, die Polyamid-Formmasse zeigt aber Verfärbungen und Ausblühungen. Ein CTI von 600V wird ebenfalls nicht erreicht. Die Kombination von DEPAL mit PHOPAL erreicht den GWIT > =775 °C nicht, die Kombination von DEPAL mit Melam (V3) erfüllt UL 94 V-0 und GWIT 775 °C nicht.

**Tabelle 2: PA 6 GF 30 Versuchsergebnisse. V5-V7 sind Vergleichsbeispiele, B4 und B5 nicht erfindungsgemäße Polyamid-Formmasse**

| | | V5 | V6 | V7 | B4 | B5 |
|---|---|---|---|---|---|---|
| A: Polyamid 6 | [Gew.-%] | 49,55 | 49,55 | 49,55 | 49,55 | 49,55 |
| E: Glasfasern HP3610 | [Gew.-%] | 30 | 30 | 30 | 30 | 30 |
| B: DEPAL | [Gew.-%] | 20 | 12 | 17 | 12 | 14 |
| C: PHOPAL | [Gew.-%] | | | 3 | 3 | 3 |
| MPP | [Gew.-%] | | 8 | | | |
| D2: Delacal 420 | [Gew.-%] | | | | 5 | 3 |
| G: Licowax E | [Gew.-%] | 0,25 | 0,25 | 0,25 | 0,25 | 0,25 |
| F: P-EPQ | [Gew.-%] | 0,20 | 0,20 | 0,20 | 0,20 | 0,20 |

| Messergebnisse | | | | | | |
|---|---|---|---|---|---|---|
| UL 94 bei 0,4 mm Dicke | | V-1 | V-0 | V-0 | V-0 | V-0 |
| GWIT bei 0,75 mm Dicke | [°C] | 700 | 775 | 725 | 800 | 775 |
| MVR 250°C/2,16 kg | | 5 | 12 | 5 | 10 | 9 |
| Ausblühungen* | | keine | deutlich | keine | keine | keine |
| CTI | [Volt] | 600 | 550 | 600 | 600 | 600 |
| Schlagzähigkeit | [kJ/m²] | 61 | 59 | 62 | 67 | 65 |
| Kerbschlagzähigkeit | [kJ/m²] | 11 | 9,8 | 10 | 12 | 12 |

| | | | | | | |
|---|---|---|---|---|---|---|
| * 14 Tage 100 % Feuchte 70 °C | | | | | | |

Die Versuche in Polyamid 6 zeigen ein ähnliches Bild: nur die die Kombination von Polyamid 6 mit Glasfasern, DEPAL, PHOPAL und Melem werden Formmassen erhalten, die gleichzeitig UL 94 V-0 bei 0,4 mm, GWIT >= 775 °C, CTI 600V, keine Ausblühungen, gute Fließfähigkeit und gute mechanische Werte aufweisen.

**Tabelle 3: PA 10T GF 30 Versuchsergebnisse. V8-V10 sind Vergleichsbeispiele, B6 und B7 erfindungsgemäße Polyamid-Formmasse**

| | | V8 | V9 | V10 | B6 | B7 |
|---|---|---|---|---|---|---|
| A: Polyamid 10T | [Gew.-%] | 49,55 | 49,55 | 49,55 | 49,55 | 49,55 |
| E: Glasfasern HP3610 | [Gew.-%] | 30 | 30 | 30 | 30 | 30 |
| B: DEPAL | [Gew.-%] | 20 | 12 | 17 | 12 | 14 |
| C: PHOPAL | [Gew.-%] | | | 3 | 3 | 3 |
| D2: Delacal 420 | [Gew.-%] | | 8 | | 5 | 3 |
| G: Licowax E | [Gew.-%] | 0,25 | 0,25 | 0,25 | 0,25 | 0,25 |
| F: P-EPQ | [Gew.-%] | 0,20 | 0,20 | 0,20 | 0,20 | 0,20 |

| Messergebnisse | | | | | | |
|---|---|---|---|---|---|---|
| UL 94 bei 0,4 mm Dicke | | V-1 | V-1 | V-0 | V-0 | V-0 |
| GWIT bei 0,75 mm Dicke | [°C] | 750 | 750 | 750 | 800 | 825 |
| Ausblühungen* | | keine | deutlich | keine | keine | keine |
| CTI | [Volt] | 600 | 550 | 600 | 600 | 600 |
| Schlagzähigkeit | [kJ/m²] | 70 | 61 | 61 | 71 | 68 |
| Kerbschlagzähigkeit | [kJ/m²] | 9 | 8 | 9 | 8 | 9 |

| | | | | | | |
|---|---|---|---|---|---|---|
| * 14 Tage 100 % Feuchte 70 °C | | | | | | |

Auch in Polyamid 10T werden nur durch die erfindungsgemäße Kombination von Polyamid mit Glasfasern, DEPAL, PHOPAL und Melem Formmassen erhalten, die gleichzeitig UL 94 V-0 bei 0,4 mm, GWIT >= 775 °C, CTI 600V, keine Ausblühungen, und gute mechanische Werte aufweisen. Die Kombination von DEPAL und MPP kann in PA 10T nicht verarbeitet werden.

**Tabelle 4: PA 6T/66 GF 30 Versuchsergebnisse. V11-V13 sind Vergleichsbeispiele, B8 und B9 erfindungsgemäße Polyamid-Formmasse**

| | | V11 | V12 | V13 | B8 | B9 |
|---|---|---|---|---|---|---|
| A: Polyamid 6T/66 | [Gew.-%] | 54,55 | 54,55 | 54,55 | 54,55 | 54,55 |
| E: Glasfasern HP3610 | [Gew.-%] | 30 | 30 | 30 | 30 | 30 |
| B: DEPAL | [Gew.-%] | 15 | 10 | 12 | 10 | 8 |
| C: PHOPAL | [Gew.-%] | | | 3 | 2 | 2 |
| D2: Delacal 500 | [Gew.-%] | | 5 | | 3 | 5 |
| G: Licowax E | [Gew.-%] | 0,25 | 0,25 | 0,25 | 0,25 | 0,25 |
| F: P-EPQ | [Gew.-%] | 0,20 | 0,20 | 0,20 | 0,20 | 0,20 |

| Messergebnisse | | | | | | |
|---|---|---|---|---|---|---|
| UL 94 bei 0,4 mm Dicke | | V-0 | V-1 | V-0 | V-0 | V-0 |
| GWIT bei 0,75 mm Dicke | [°C] | 750 | 750 | 750 | 825 | 800 |
| Ausblühungen* | | keine | keine | keine | keine | keine |
| CTI | [Volt] | 600 | 600 | 600 | 600 | 600 |
| Schlagzähigkeit | [kJ/m²] | 62 | 58 | 61 | 63 | 62 |
| Kerbschlagzähigkeit | [kJ/m²] | 7 | 7 | 8 | 8 | 7 |

| | | | | | | |
|---|---|---|---|---|---|---|
| * 14 Tage 100 % Feuchte 70 °C | | | | | | |

In Polyamid 6T/66 werden durch die erfindungsgemäße Kombination von Polyamid mit Glasfasern, DEPAL, PHOPAL und Melon Formmassen erhalten, die gleichzeitig UL 94 V-0 bei 0,4 mm, GWIT >= 775 °C, CTI 600V, keine Ausblühungen, und gute mechanische Werte aufweisen. Die Kombination von DEPAL und MPP kann auch in PA 6T/66 nicht verarbeitet werden

Insgesamt erreichen nur die erfindungsgemäßen Kombinationen alle zu erfüllenden Parameter.

## Patentansprüche

1. Halogenfreie, flammhemmende Polyamidzusammensetzung, enthaltend als Komponente A) 15 bis 89,9 Gew.-% eines oder mehrere thermoplastische Polyamide, als Komponente B) 5 bis 20 Gew.-% eines Dialkylphosphinsäuresalzes der Formel (I) 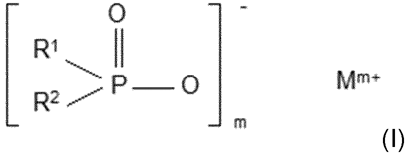 worin
R¹ und R² gleich oder verschieden sind und C₁-C₁₈-Alkyl linear, verzweigt oder cyclisch,
M Mg, Ca, Al, Sb, Sn, Ge, Ti, Zn, Fe, Zr, Ce, Bi, Sr, Mn, Li, Na, K und/oder eine protonierte Stickstoffbase;
m 1 bis 4;
n 1 bis 4;
bedeuten,
als Komponente C) 2 bis 10 Gew.-% eines Salzes der phosphorigen Säure
als Komponente D) 2 bis 10 Gew.-% eines oder mehrerer Kondensationsprodukte vom Melamin,
als Komponente E) 1 bis 50 Gew.-% Füll- und/oder Verstärkungsstoff,
als Komponente F) 0 bis 2 Gew.-% Phosphit der Formel P(OR^{a})₃, wobei R^{a} gleich oder verschieden ist und C₁-C₁₈-Alkyl linear, verzweigt oder cyclisch, C₆-C₁₈-Aryl, C₇-C₁₈-Arylalkyl und/oder C₇-C₁₈-Alkylaryl bedeutet, oder Phosphonit oder Mischungen davon, und als Komponente G) 0,1 bis 1 Gew.-% eines Esters oder Salzes von langkettigen aliphatischen Carbonsäuren (Fettsäuren), die Kettenlängen von C₁₄ bis C₄₀ aufweisen, wobei die Summe der Komponenten immer 100 Gew.-% beträgt und wobei es sich bei den thermoplastischen Polyamiden der Komponente A) um die Polyamide PA 6T/66, PA 6T/6, PA 4T, PA 9T und/oder PA 10T handelt.

2. Flammhemmende Polyamidzusammensetzung nach Anspruch 1,
enthaltend
| | |
|---|---|
| 15 bis 75,8 | Gew.-% Komponente A), |
| 5 bis 20 | Gew.-% Komponente B), |
| 2 bis 10 | Gew.-% Komponente C), |
| 2 bis 10 | Gew.-% Komponente D), |
| 15 bis 35 | Gew.-% Komponente E), |
| 0,1 bis 1 | Gew.-% Komponente F) und |
| 0,1 bis 1 | Gew.% Komponente G). |

3. Flammhemmende Polyamidzusammensetzung nach einem oder mehreren der Ansprüche 1 bis 2, enthaltend
| | |
|---|---|
| 35 bis 65,8 | Gew.-% Komponente A), |
| 5 bis 20 | Gew.-% Komponente B), |
| 2 bis 7 | Gew.-% Komponente C), |
| 2 bis 7 | Gew.-% Komponente D), |
| 25 bis 35 | Gew.-% Komponente E), |
| 0,1 bis 0,5 | Gew.-% Komponente F) und |
| 0,1 bis 0,5 | Gew.% Komponente G). |

4. Flammhemmende Polyamidzusammensetzung nach einem oder mehreren der Ansprüche 1 bis 3, **dadurch gekennzeichnet, dass** sie einen Comparative Tracking Index (CTI) von größer als 500 Volt aufweist, gemessen nach der International Electrotechnical Commission Standard IEC-60112/3.

5. Flammhemmende Polyamidzusammensetzung nach einem oder mehreren der Ansprüche 1 bis 5, **dadurch gekennzeichnet, dass** sie eine Bewertung von V-0 nach UL-94 bei einer Dicke des Probenkörpers von 3,2 mm bis 0,4 mm erreicht.

6. Flammhemmende Polyamidzusammensetzung nach einem oder mehreren der Ansprüche 1 bis 5, **dadurch gekennzeichnet, dass** sie einen Glow Wire Flammability Index (GWFI) nach IEC-60695-2-12 von 850 °C oder mehr bei eine Dicke des Probenkörpers von 0,4 bis 3 mm aufweist.

7. Flammhemmende Polyamidzusammensetzung nach einem oder mehreren der Ansprüche 1 bis 5, **dadurch gekennzeichnet, dass** sie einen Glow Wire Ignition Temperature Index (GWIT) nach IEC-60695-2-13 von 750 °C oder mehr bei einer Dicke des Probenkörpers von 0,4 bis 3 mm aufweist.

8. Flammhemmende Polyamidzusammensetzung nach einem oder mehreren der Ansprüche 1 bis 7, **dadurch gekennzeichnet, dass** es sich bei Komponente D) um Melam, Melem und/oder Melon handelt.

9. Flammhemmende Polyamidzusammensetzung nach einem oder mehreren der Ansprüche 1 bis 8, **dadurch gekennzeichnet, dass** es sich bei Komponente D) um Melem handelt.

10. Flammhemmende Polyamidzusammensetzung nach einem oder mehreren der Ansprüche 1 bis 9, **dadurch gekennzeichnet, dass** bei der Komponente B) R¹ und R² gleich oder verschieden sind und Methyl, Ethyl, n-Propyl, iso-Propyl, n-Butyl, tert.-Butyl und/oder n-Pentyl bedeuten.

11. Flammhemmende Polyamidzusammensetzung nach einem oder mehreren der Ansprüche 1 bis 10, **dadurch gekennzeichnet, dass** das Salz der phosphorigen Säure (Komponente C)) der allgemeinen Formel (II)
[HP(=O)O₂]²⁻ M ^{m+} (II)
entspricht, worin
M Mg, Ca, Al, Sb, Sn, Ge, Ti, Zn, Fe, Zr, Ce, Bi, Sr, Mn, Li, Na und/oder K bedeutet.

12. Flammhemmende Polyamidzusammensetzung nach einem oder mehreren der Ansprüche 1 bis 10, **dadurch gekennzeichnet, dass** es sich bei dem Salz der phosphorigen Säure (Komponente C)) um Aluminiumphosphit Al(H₂PO₃)₃, sekundäres Aluminiumphosphit Al₂(HPO₃)₃, Aluminiumphosphittetrahydrat Al₂(HPO₃)₃*4aq, Aluminiumphosphonat, Basisches Aluminiumphosphit Al(OH)(H₂PO₃)₂*2aq, Al₇(HPO₃)₉(OH)ₑ(1,6-Hexandiamin)_{1,5}*12H₂O, Al₂(HPO₃)₃*xAl₂O₃*nH₂O mit x = 1 - 2,27 und n = 1 - 50 und/oder Al₄HₑP₁₆O₁₈ handelt.

13. Flammhemmende Polyamidzusammensetzung nach einem oder mehreren der Ansprüche 1 bis 10, **dadurch gekennzeichnet, dass** es sich bei dem Salz der phosphorigen Säure um Aluminiumphosphite der Formeln (III), (IV) und/oder (V) handelt, wobei
Formel (III): Al₂(HPO₃)₃ x (H₂O)_{q}
umfasst und
q 0 bis 4 bedeutet;
Formel (IV) Al_{2,00}M_{z}(HPO₃)_{y}(OH)ᵥ x (H₂O)_{w}
umfasst und
M Alkalimetallionen,
z 0,01 bis 1,5,
y 2,63 bis 3,5,
v 0 bis 2 und
w 0 bis 4 bedeutet;
Formel (V) Al_{2,00}(HPO₃)ᵤ(H₂PO₃)ₜ x (H₂O)ₛ
umfasst und
u 2 bis 2,99 und
t 2 bis 0,01 und
s 0 bis 4 bedeutet,
und/oder es sich um Mischungen von Aluminiumphosphit der Formel (VII) mit schwerlöslichen Aluminiumsalzen und stickstofffreien Fremdionen, Mischungen von Aluminiumphosphit der Formel (IX) mit Aluminiumsalzen, um Mischungen von Aluminiumphosphiten der Formeln (VII) bis (IX) mit Aluminiumphosphit [Al(H₂PO₃)₃], mit sekundäres Aluminiumphosphit [Al₂(HPO₃)₃], mit basischem Aluminiumphosphit [Al(OH)(H₂PO₃)₂*2aq], mit Aluminiumphosphittetrahydrat [Al₂(HPO₃)₃*4aq], mit Aluminiumphosphonat, mit Al₇(HPO₃)₉(OH)₆(1,6-Hexandiamin)_{1,5}*12H₂O, mit Al₂(HPO₃)₃*xAl₂O₃*nH₂O mit x = 1 - 2,27 und n = 1 - 50 und/oder mit Al₄HₑP₁₆O₁₈ handelt.

14. Flammhemmende Polyamidzusammensetzung nach einem oder mehreren der Ansprüche 1 bis 13, **dadurch gekennzeichnet, dass** es sich bei dem verstärkenden Füll- oder Verstärkungsstoff (Komponente E)) um Glasfasern handelt.

15. Flammhemmende Polyamidzusammensetzung nach einem oder mehreren der Ansprüche 1 bis 14, **dadurch gekennzeichnet, dass** es sich bei den Phosphoniten (Komponente F)) um solche der allgemeinen Struktur
R-[P(OR⁵)₂]ₘ (VI)
handelt, wobei
R ein ein- oder mehrwertiger aliphatischer, aromatischer oder heteroaromatischer organischer Rest ist und
R⁵ eine Verbindung der Struktur (VII) 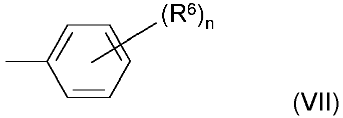
ist oder die beiden Reste R⁵ eine verbrückende Gruppe der Struktur (VIII) bilden 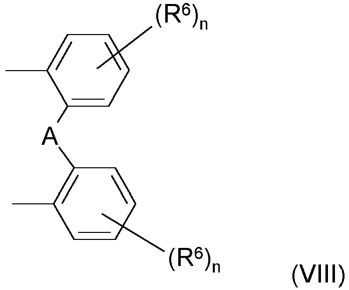 mit
A direkter Bindung, O, S, C₁₋₁₈-Alkylen (linear oder verzweigt), C₁₋₁₈-Alkyliden (linear oder verzweigt), in denen
R⁶ unabhängig voneinander C₁₋₁₂-Alkyl (linear oder verzweigt), C₁₋₁₂-Alkoxy und/oder C₅₋₁₂-Cycloalkyl bedeuten und
n 0 bis 5 sowie
m 1 bis 4 bedeutet.

16. Flammhemmende Polyamidzusammensetzung nach einem oder mehreren der Ansprüche 1 bis 15, **dadurch gekennzeichnet, dass** es sich bei der Komponente G) um Alkali-, Erdalkali-, Aluminium- und/oder Zinksalze von langkettigen Fettsäuren mit 14 bis 40 C-Atomen und/oder um Umsetzungsprodukte von langkettigen Fettsäuren mit 14 bis 40 C-Atomen mit mehrwertigen Alkoholen, wie Ethylenglykol, Glycerin, Trimethylolpropan und/oder Pentaerythrit handelt

17. Ein dreidimensionaler Artikel umfassend die Zusammensetzung nach einem oder mehreren der Ansprüche 1 bis 16, **dadurch gekennzeichnet, dass** es sich hierbei Formkörper, Spritzgussteile, Extrusionsmassen und Extrusionsteile handelt.

18. Verwendung einer flammhemmenden Polyamidzusammensetzung nach einem oder mehreren der Ansprüche 1 bis 16 in oder für Steckverbinder, stromberührten Teilen in Stromverteilern (FI-Schütz), Platinen, Vergussmassen, Stromsteckern, Schutzschaltern, Lampengehäuse (LED Gehäuse), Kondensatorgehäuse, Spulenkörper und Ventilatoren für Schutzkontakte, Stecker, in/auf Platinen, Gehäuse für Stecker, Kabel, flexible Leiterplatten, Ladekabel für Handys, Motorabdeckungen, Textilbeschichtungen und anderen Produkten.

## Claims

1. Halogen-free, flame-retardant polyamide composition comprising as component A) 15% to 89.9% by weight of one or more thermoplastic polyamides, as component B) 5% to 20% by weight of a dialkylphosphinic salt of the formula (I) 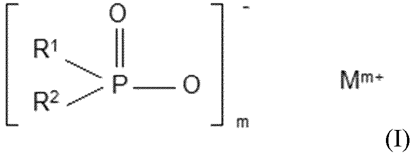 in which
R¹ and R² are the same or different and are C₁-C₁₈-alkyl in linear, branched or cyclic form,
M is Mg, Ca, Al, Sb, Sn, Ge, Ti, Zn, Fe, Zr, Ce, Bi, Sr, Mn, Li, Na, K and/or a protonated nitrogen base;
m is 1 to 4;
n is 1 to 4;
as component C) 2% to 10% by weight of a salt of phosphorous acid,
as component D) 2% to 10% by weight of one or more condensation products of melamine,
as component E) 1% to 50% by weight of filler and/or reinforcer,
as component F) 0% to 2% by weight of phosphite of the formula P(OR^{a})₃ where R^{a} is the same or different and is C₁-C₁₈-alkyl in linear, branched or cyclic form, C₆-C₁₈-aryl, C₇-C₁₈-arylalkyl and/or C₇-C₁₈-alkylaryl, or phosphonite or mixtures thereof, and as component G) 0.1% to 1% by weight of an ester or salt of long-chain aliphatic carboxylic acids (fatty acids) which have chain lengths of C₁₄ to C₄₀, where the sum total of the components is always 100% by weight and where the thermoplastic polyamides of component A) are polyamides PA 6T/66, PA 6T/6, PA 4T, PA 9T and/or PA 10T.

2. Flame-retardant polyamide composition according to Claim 1, comprising
| | |
|---|---|
| 15% to 75.8% | by weight of component A), |
| 5% to 20% | by weight of component B), |
| 2% to 10% | by weight of component C), |
| 2% to 10% | by weight of component D), |
| 15% to 35% | by weight of component E), |
| 0.1% to 1% | by weight of component F) and |
| 0.1% to 1% | by weight of component G). |

3. Flame-retardant polyamide composition according to one or more of Claims 1 to 2, comprising
| | |
|---|---|
| 35% to 65.8% | by weight of component A), |
| 5% to 20% | by weight of component B), |
| 2% to 7% | by weight of component C), |
| 2% to 7% | by weight of component D), |
| 25% to 35% | by weight of component E), |
| 0.1% to 0.5% | by weight of component F) and |
| 0.1% to 0.5% | by weight of component G). |

4. Flame-retardant polyamide composition according to one or more of Claims 1 to 3, **characterized in that** it has a comparative tracking index (CTI) of greater than 500 volts, measured according to International Electrotechnical Commission Standard IEC 60112/3.

5. Flame-retardant polyamide composition according to one or more of Claims 1 to 5, **characterized in that** it attains a V-0 assessment according to UL-94 at a specimen thickness of 3.2 mm to 0.4 mm.

6. Flame-retardant polyamide composition according to one or more of Claims 1 to 5, **characterized in that** it has a glow wire flammability index (GWFI) according to IEC 60695-2-12 of 850°C or more at a specimen thickness of 0.4 to 3 mm.

7. Flame-retardant polyamide composition according to one or more of Claims 1 to 5, **characterized in that** it has a glow wire ignition temperature index (GWIT) according to IEC 60695-2-13 of 750°C or more at a specimen thickness of 0.4 to 3 mm.

8. Flame-retardant polyamide composition according to one or more of Claims 1 to 7, **characterized in that** component D) is melam, melem and/or melon.

9. Flame-retardant polyamide composition according to one or more of Claims 1 to 8, **characterized in that** component D) is melem.

10. Flame-retardant polyamide composition according to one or more of Claims 1 to 9, **characterized in that**, in component B), R¹ and R² are the same or different and are methyl, ethyl, n-propyl, isopropyl, n-butyl, tert-butyl and/or n-pentyl.

11. Flame-retardant polyamide composition according to one or more of Claims 1 to 10, **characterized in that** the salt of phosphorous acid (component C)) conforms to the formula (II)
[HP(=O)O₂]²⁻ M ^{m+} (II)
in which
M is Mg, Ca, Al, Sb, Sn, Ge, Ti, Zn, Fe, Zr, Ce, Bi, Sr, Mn, Li, Na and/or K.

12. Flame-retardant polyamide composition according to one or more of Claims 1 to 10, **characterized in that** the salt of phosphorous acid (component C)) is aluminum phosphite Al(H₂PO₃)₃, secondary aluminum phosphite Al₂(HPO₃)₃, aluminum phosphite tetrahydrate Al₂(HPO₃)₃*4aq, aluminum phosphonate, basic aluminum phosphite Al(OH)(H₂PO₃)₂*2aq, Al₇(HPO₃)₉(OH)₆(1,6-hexanediamine)_{1.5}*12H₂O, Al₂(HPO₃)₃*xAl₂O₃*nH₂O with x = 1-2.27 and n = 1-50 and/or Al₄H₆P₁₆O₁₈.

13. Flame-retardant polyamide composition according to one or more of Claims 1 to 10, **characterized in that** the salt of phosphorous acid comprises aluminum phosphites of the formulae (III), (IV) and/or (V), where
Formula (III): Al₂(HPO₃)₃ x (H₂O)_{q}
and
q is 0 to 4;
Formula (IV) Al_{2.00}M_{z}(HPO₃)_{y}(OH)ᵥ x (H₂₀)_{w}
and
M represents alkali metal ions,
z is 0.01 to 1.5,
y is 2.63 to 3.5,
v is 0 to 2 and
w is 0 to 4;
Formula (V) Al_{2.00}(HPO₃)ᵤ(H₂PO₃)ₜ x (H₂O)ₛ
and
u is 2 to 2.99 and
t is 2 to 0.01 and
s is 0 to 4,
and/or comprises mixtures of aluminum phosphite of the formula (VII) with sparingly soluble aluminum salts and nitrogen-free extraneous ions, mixtures of aluminum phosphite of the formula (IX) with aluminum salts, mixtures of aluminum phosphite of the formulae (VII) to (IX) with aluminum phosphite [Al(H₂PO₃)₃], with secondary aluminum phosphite [Al₂(HPO₃)₃], with basic aluminum phosphite [Al(OH)(H₂PO₃)₂*2aq], with aluminum phosphite tetrahydrate [Al₂(HPO₃)₃*4aq], with aluminum phosphonate, with Al₇(HPO₃)₉(OH)₆(1,6-hexanediamine)_{1.5}*12H₂O, with Al₂(HPO₃)₃*xAl₂O₃*nH₂O with x = 1-2.27 and n = 1-50 and/or with Al₄H₆P₁₆O₁₈.

14. Flame-retardant polyamide composition according to one or more of Claims 1 to 13, **characterized in that** the reinforcing filler or reinforcer (component E)) comprises glass fibers.

15. Flame-retardant polyamide composition according to one or more of Claims 1 to 14, **characterized in that** the phosphonites (component F)) are those of the general structure
R-[P(OR⁵)₂]ₘ (VI)
where
R is a mono- or polyvalent aliphatic, aromatic or heteroaromatic organic radical and
R⁵ is a compound of the structure (VII) 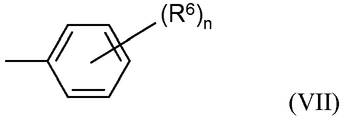
or the two R⁵ radicals form a bridging group of the structure (VIII) 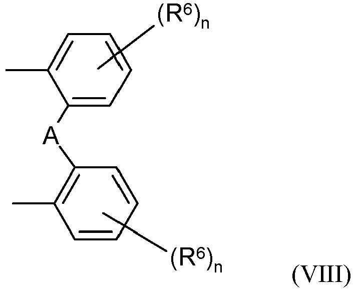 with
A is a direct bond, O, S, C₁₋₁₈-alkylene (linear or branched), C₁₋₁₈-alkylidene (linear or branched), in which
R⁶ is independently C₁₋₁₂-alkyl (linear or branched), C₁₋₁₂-alkoxy and/or C₅₋₁₂-cycloalkyl and
n is 0 to 5 and
m is 1 to 4.

16. Flame-retardant polyamide composition according to one or more of Claims 1 to 15, **characterized in that** component G) comprises alkali metal, alkaline earth metal, aluminum and/or zinc salts of long-chain fatty acids having 14 to 40 carbon atoms and/or reaction products of long-chain fatty acids having 14 to 40 carbon atoms with polyhydric alcohols such as ethylene glycol, glycerol, trimethylolpropane and/or pentaerythritol.

17. Three-dimensional article comprising the composition according to one or more of Claims 1 to 16, **characterized in that** said article comprises shaped bodies, injection moldings, extrusion compounds and extrudates.

18. Use of a flame-retardant polyamide composition according to one or more of Claims 1 to 16 in or for plug connectors, current-bearing components in power distributors (residual current protection), circuit boards, potting compounds, plug connectors, circuit breakers, lamp housings (LED housings), capacitor housings, coil elements and ventilators for grounding contacts, plugs, in/on printed circuit boards, housings for plugs, cables, flexible circuit boards, charging cables for mobile phones, motor covers, textile coatings and other products.

## Revendications

1. Composition de polyamides ignifuge non halogénée, contenant comme composant A) 15 à 89,9 % en poids d'un ou plusieurs polyamides thermoplastiques, comme composant B) 5 à 20 % en poids d'un sel d'un acide dialkylphosphinique de formule (I) 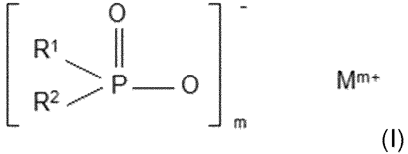 dans laquelle
R¹ et R² sont identiques ou différents et représentent un alkyle en C₁-C₁₈ linéaire, ramifié ou cyclique,
M représente Mg, Ca, Al, Sb, Sn, Ge, Ti, Zn, Fe, Zr, Ce, Bi, Sr, Mn, Li, Na, K et/ou une base azotée protonée ;
m représente 1 à 4 ;
n représente 1 à 4 ;
comme composant C) 2 à 10 % en poids d'un sel de l'acide phosphoreux
comme composant D) 2 à 10 % en poids d'un ou plusieurs produits de condensation de la mélamine,
comme composant E) 1 à 50 % en poids d'une charge et/ou d'une substance de renforcement,
comme composant F) 0 à 2 % en poids d'un phosphite de formule P(OR^{a})₃, dans laquelle R^{a} est identique ou différent et représente un alkyle en C₁-C₁₈ linéaire, ramifié ou cyclique, un aryle en C₆-C₁₈, un arylakyle en C₇-C₁₈ et/ou un alkylaryle en C₇-C₁₈, ou un phosphite ou des mélanges de ceux-ci, et comme composant G) 0,1 à 1 % en poids d'un ester ou d'un sel d'acides carboxyliques aliphatiques à longue chaîne (acides gras) qui ont des longueurs de chaîne de C₁₄ à C₄₀, la somme des composants étant toujours égale à 100 % en poids et les polyamides thermoplastiques du composant A) étant les polyamides PA 6T/66, PA 6T/6, PA 4T, PA 9T et/ou PA 10T.

2. Composition de polyamides ignifuge selon la revendication 1, contenant
15 à 75,8 % en poids du composant A),
5 à 20 % en poids du composant B),
2 à 10 % en poids du composant C),
2 à 10 % en poids du composant D),
15 à 35 % en poids du composant E),
0,1 à 1 % en poids du composant F) et
0,1 à 1 % en poids du composant G).

3. Composition de polyamides ignifuge selon l'une ou plusieurs des revendications 1 à 2, contenant
35 à 65,8 % en poids du composant A),
5 à 20 % en poids du composant B),
2 à 7 % en poids du composant C),
2 à 7 % en poids du composant D),
25 à 35 % en poids du composant E),
0,1 à 0,5 % en poids du composant F) et
0,1 à 0,5 % en poids du composant G).

4. Composition de polyamides ignifuge selon l'une ou plusieurs des revendications 1 à 3, **caractérisée en ce qu'**elle présente un indice de tenue au cheminement (CTI) supérieur à 500 volts, mesuré selon la norme de la Commission électrotechnique internationale CEI-60112/3.

5. Composition de polyamides ignifuge selon l'une ou plusieurs des revendications 1 à 5, **caractérisée en ce qu'**elle atteint un classement de V-0 selon UL-94 pour une épaisseur de l'éprouvette de 3,2 mm à 0,4 mm.

6. Composition de polyamides ignifuge selon l'une ou plusieurs des revendications 1 à 5, **caractérisée en ce qu'**elle présente un indice d'inflammabilité au fil incandescent (GWFI) selon CEI-60695-2-12 de 850 °C ou plus pour une épaisseur de l'éprouvette de 0,4 à 3 mm.

7. Composition de polyamides ignifuge selon l'une ou plusieurs des revendications 1 à 5, **caractérisée en ce qu'**elle présente une température d'inflammation du fil incandescent (GWIT) selon CEI-60695-2-13 de 750 °C ou plus pour une épaisseur de l'éprouvette de 0,4 à 3 mm.

8. Composition de polyamides ignifuge selon l'une ou plusieurs des revendications 1 à 7, **caractérisée en ce que** le composant D) est le melam, le melem et/ou le melon.

9. Composition de polyamides ignifuge selon l'une ou plusieurs des revendications 1 à 8, **caractérisée en ce que** le composant D) est le melem.

10. Composition de polyamides ignifuge selon l'une ou plusieurs des revendications 1 à 9, **caractérisée en ce que**, dans le composant B), R¹ et R² sont identiques ou différents et représentent un radical méthyle, éthyle, n-propyle, iso-propyle, n-butyle, tert-butyle et/ou n-pentyle.

11. Composition de polyamides ignifuge selon l'une ou plusieurs des revendications 1 à 10, **caractérisée en ce que** le sel de l'acide phosphoreux (composant C)) correspond à la formule générale (II)
[HP(=O)O₂] ²⁻M^{m+} (II)
dans laquelle
M représente Mg, Ca, Al, Sb, Sn, Ge, Ti, Zn, Fe, Zr, Ce, Bi, Sr, Mn, Li, Na et/ou K.

12. Composition de polyamides ignifuge selon l'une ou plusieurs des revendications 1 à 10, **caractérisée en ce que** le sel de l'acide phosphoreux (composant C)) est le phosphite d'aluminium Al(H₂PO₃)₃, le phosphite d'aluminium secondaire Al₂(HPO₃)₃, le phosphite d'aluminium tétrahydraté Al₂(HPO₃)₃*4aq, le phosphonate d'aluminium, le phosphite basique d'aluminium Al(OH)(H₂PO₃)₂*2aq, Al₇(HPO₃)₉(OH)₆(1,6-hexanediamine)_{1,5}*12H₂O, Al₂(HPO₃)₃*xAl₂O₃*nH₂O avec x = 1 - 2,27 et n = 1 - 50 et/ou Al₄H₆P₁₆O₁₈.

13. Composition de polyamides ignifuge selon l'une ou plusieurs des revendications 1 à 10, **caractérisée en ce que**, pour ce qui concerne le sel de l'acide phosphoreux, il s'agit des phosphites d'aluminium de formules (III), (IV) et/ou (V), dans lesquelles
la formule (III) comprend Al₂(HPO₃)₃ x (H₂O)_{q} et
q représente 0 à 4 ;
la formule (IV) comprend Al_{2,00}M₂(HPO₃)_{y}(OH)ᵥ x (H₂O)_{w} et
M représente des ions de métaux alcalins,
z représente 0,01 à 1,5, représente 2,63 à 3,5,
y v représente 0 à 2 et
w représente 0 à 4 ;
la formule (V) comprend Al_{2,00}(HPO₃)ᵤ(H₂PO₃)ₜ × (H₂O)ₛ et
u représente 2 à 2,99 et
t représente 2 à 0,01 et
s représente 0 à 4,
et/ou dans lequel il s'agit de mélanges de phosphite d'aluminium de formule (VII) avec des sels d'aluminium difficilement solubles et des ions étrangers non azotés, de mélanges de phosphites d'aluminium de formule (IX) avec des sels d'aluminium, de mélanges de phosphites d'aluminium de formules (VII) à (IX) avec du phosphite d'aluminium [Al(H₂PO₃)₃], avec du phosphite d'aluminium secondaire [Al₂(HPO₃)₃], avec du phosphite basique d'aluminium [Al(OH)(H₂PO₃)₂*2aq, avec du phosphite d'aluminium tétrahydraté [Al₂(HPO₃)₃*4aq], avec du phosphonate d'aluminium, avec du Al₇(HPO₃)₉(OH)₆(1,6-hexanediamine) _{1,5}*12H₂O, avec du Al₂(HPO₃)₃*xAl₂O₃*nH₂O avec x = 1 - 2,27 et n = 1 - 50 et/ou avec du Al₄H₆P₁₆O₁₈.

14. Composition de polyamides ignifuge selon l'une ou plusieurs des revendications 1 à 13, **caractérisée en ce que**, pour ce qui concerne la charge ou la substance de renforcement (composant E)), il s'agit de fibres de verre.

15. Composition de polyamides ignifuge selon l'une ou plusieurs des revendications 1 à 14, **caractérisée en ce que** les phosphonites (composant F)) sont ceux de structure générale
R-[P(OR⁵)₂]ₘ (VI)
dans laquelle
R représente un radical organique aliphatique, aromatique ou hétéroaromatique mono- ou polyvalent et
R⁵ représente un composé de structure (VII) 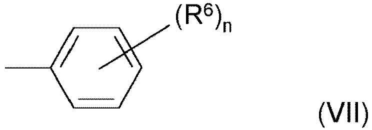
ou les deux radicaux R⁵ forment un groupe pontant de formule (VIII) 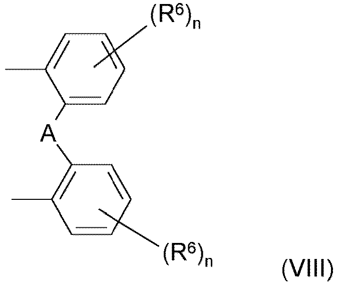
avec
A représente une liaison directe, O, S, un alkylène en C₁₋₁₈ (linéaire ou ramifié), un alkylidène en C₁₋₁₈ (linéaire ou ramifié), dans lesquelles
R⁶ représente indépendamment les uns des autres un alkyle en C₁₋₁₂ (linéaire ou ramifié), un alcoxy en C₁₋₁₂ et/ou un cycloalkyle en C₅₋₁₂ et
n représente 0 à 5 ainsi que
m représente 1 à 4.

16. Composition de polyamides ignifuge selon l'une ou plusieurs des revendications 1 à 15, **caractérisée en ce que**, pour ce qui concerne le composant G), il s'agit de sels de métaux alcalins, de métaux alcalino-terreux, d'aluminium et/ou de zinc d'acides gras à longue chaîne ayant 14 à 40 atomes de carbone, et/ou de produits de la réaction d'acides gras à longue chaîne ayant 14 à 40 atomes de carbone avec des polyalcools tels que l'éthylène, le glycérol, le triméthylolpropane et/ou le pentaérythritol.

17. Article tridimensionnel comprenant la composition selon l'une ou plusieurs des revendications 1 à 16, **caractérisé en ce qu'**il s'agit alors d'objets moulés, de pièces moulées par injection, de masses d'extrusion et de pièces extrudées.

18. Utilisation d'une composition de polyamides ignifuge selon l'une ou plusieurs des revendications 1 à 16 dans ou pour des contacteurs, des pièces en contact avec le courant dans des répartiteurs de courant (contacteur mécanique FI), des platines, des masses de scellement, des fiches d'alimentation, des interrupteurs de sécurité, des boîtiers de lampe (boîtiers LED), des carters de condensateur, des carcasses de bobine et des ventilateurs pour contact de protection, des prises, dans/sur des platines, des boîtiers pour prises, des câbles, des cartes imprimées souples, des câbles de chargement pour téléphones portables, des couvercles de moteur, des revêtements textiles et d'autres produits.
